# EUROPEAN PATENT APPLICATION

(11) **EP 4 641 957 A1**
(43) Date of publication of application: **29.10.2025**
(21) Application number: 23905946.2
(22) Date of filing: 19.12.2023
(51) Int. Cl.: H04J 14/02

(54) **SIGNAL CONVERSION MODULE, SIGNAL CONVERSION METHOD, OPTICAL FIBER TRANSMISSION SYSTEM, AND STORAGE MEDIUM**

(30) Priority: 21.12.2022 CN 202211652528; 21.07.2023 CN 202310900208
(71) Applicant: Ruijie Networks Co., Ltd., Fuzhou, Fujian 350002 (CN)
(72) Inventor: HAN, Zhaowei, Fuzhou, Fujian 350002 (CN); YANG, Shengyun, Fuzhou, Fujian 350002 (CN); XIE, Haiyang, Fuzhou, Fujian 350002 (CN)
(74) Representative: Mathys & Squire
(86) International application number: PCT/CN2023/139853
(87) International publication number: WO 2024/131783

(57) **Abstract**

The present application provides a signal conversion module, a signal conversion method, an optical fiber transmission system, and a storage medium. The signal conversion module comprises a conversion unit and a processing unit, wherein the conversion unit is used for converting at least two first electric signals into at least two first optical signals, the at least two first optical signals respectively corresponding to different wavelengths; and the processing unit is used for multiplexing the at least two first optical signals into a first mixed optical signal.

## Description

### CROSS-REFERENCE TO RELATED APPLICATIONS

This application claims priority to Chinese Patent Application No. 202211652528.8, filed with the China National Intellectual Property Administration on December 21, 2022 and entitled "INTEGRATED COLOR-LIGHT OPTICAL MODULE AND OPTICAL FIBER DATA TRANSMISSION SYSTEM", and also claims priority to Chinese Patent Application No. 202310900208.8, filed with the China National Intellectual Property Administration on July 21, 2023 and entitled "SIGNAL CONVERSION MODULE AND SIGNAL CONVERSION METHOD", both of which are incorporated herein by reference in their entirety.

### TECHNICAL FIELD

This application relates to the field of communication technologies, and in particular, to a signal conversion module, a signal conversion method, an optical fiber transmission system, and a storage medium.

### BACKGROUND

With the development of communication technologies, the number of users accessing network is increasing, and the users are imposing increasingly high requirements on the network data transmission rate. Therefore, a three-layer networking architecture including a core-layer network device, an aggregation-layer network device and an access-layer network device has been widely used in network design, providing users with a safe, reliable, scalable, and cost-effective interconnected network. The aggregation-layer network device, as a physical entity of an aggregation layer, has a main function of aggregating data from the access-layer network device and then forwarding the data to the core-layer network device, thereby alleviating the load of the core-layer network device. An aggregation-layer network device (such as an aggregation switch) is typically an active device and is generally deployed in a low voltage room. When a large number of aggregation switches are deployed in a low voltage room area, due to the need for active power supply, high requirements are usually imposed on the low voltage room.

### SUMMARY

This application provides a signal conversion module, a signal conversion method, an optical fiber transmission system, and a storage medium.

According to a first aspect, an embodiment of this application provides a signal conversion module including: a conversion unit and a processing unit. The conversion unit is configured to convert at least two first electrical signals into at least two first optical signals, and the at least two first optical signals respectively correspond to different wavelengths. The processing unit is configured to multiplex the at least two first optical signals into a first mixed optical signal.

In this solution, the conversion unit and the processing unit are integrated in one signal conversion module, so that when the signal conversion module is deployed, a large amount of operation and maintenance management can be reduced. In addition, the signal conversion module is a passive network device, and the signal conversion module does not need to be deployed in a dedicated low voltage room (some organizations even have no low voltage room, and if there is no low voltage room or the environment of the low voltage room is poor, the signal conversion module cannot be deployed, resulting in poor applicability). Therefore, the signal conversion module provided in this application can reduce the operation and maintenance costs and difficulties of low voltage rooms, and achieve high applicability. The signal conversion module may be deployed in an indoor equipment room, so that the signal conversion module is not subject to external temperature, humidity, or lightning weather. This reduces the impact of the natural environment on the signal conversion module, prolongs the service life of the signal conversion module, and reduces replacement and maintenance costs.

In a possible implementation method, the at least two first electrical signals are electrical signals transmitted by a core switch. Compared to separately deploying an optical module and a wavelength division multiplexing/demultiplexing device of a core-layer network device side, integrating a communication unit, the conversion unit, and the processing unit into one signal conversion module can reduce the number of devices deployed at the core-layer network device side and also reduces optical fiber deployed between the optical module and the wavelength division multiplexing/demultiplexing device of the core-layer network device side, thereby achieving simple operation and maintenance management.

In a possible implementation method, the processing unit is further configured to demultiplex a received second mixed optical signal into at least two second optical signals, where the at least two second optical signals respectively correspond to different wavelengths; and the conversion unit is further configured to convert the at least two second optical signals into at least two second electrical signals.

In a possible implementation method, the second mixed optical signal is a mixed optical signal obtained by multiplexing a plurality of optical signals transmitted by an access switch.

In a possible implementation method, the conversion unit includes a color laser sub-unit and a detector sub-unit. The color laser sub-unit is configured to convert the at least two received first electrical signals into at least two first optical signals, where the at least two first optical signals respectively correspond to different wavelengths. The detector sub-unit is configured to convert the at least two received second optical signals into at least two second electrical signals.

In a possible implementation method, the processing unit includes an internal multiplexer sub-unit and an internal demultiplexer sub-unit. The internal multiplexer sub-unit is configured to multiplex the at least two received first optical signals into a first mixed optical signal. The internal demultiplexer sub-unit is configured to demultiplex the received second mixed optical signal into at least two second optical signals, where the at least two optical signals correspond to different wavelengths.

In a possible implementation method, the internal multiplexer sub-unit includes: first-stage internal multiplexers, configured to multiplex the at least two received first optical signals into a plurality of mixed optical signals; and a second-stage internal multiplexer, configured to multiplex the plurality of received mixed optical signals into the first mixed optical signal. By multi-stage internal multiplexers, each internal multiplexer can multiplex some of the optical signals, reducing the complexity of a manufacturing process.

In a possible implementation method, the internal demultiplexer sub-unit includes: a first-stage internal demultiplexer module, configured to demultiplex the received second mixed optical signal into a plurality of mixed optical signals; and second-stage internal demultiplexer modules, configured to demultiplex the plurality of received mixed optical signals into a plurality of second optical signals. By multi-stage internal demultiplexers, each internal demultiplexer can demultiplex some of the optical signals, reducing the complexity of the manufacturing process.

In a possible implementation method, the processing unit further includes an optical filter, where the optical filter is configured to filter out an interference signal to obtain the second mixed optical signal. The above solution can effectively eliminate the interference optical signal to obtain an accurate second mixed optical signal.

In a possible implementation method, the optical filter includes a first optical filter and a second optical filter. The first optical filter is configured to allow light with a wavelength in a first wave band to pass through, and the second optical filter is configured to allow light with a wavelength in a second wave band to pass through. The first wave band and the second wave band are in different ranges. The combination of a plurality of optical filters can effectively improve the filtration performance.

In a possible implementation method, the signal conversion module further includes a communication unit, where the communication unit is configured to transmit the first mixed optical signal and/or receive the second mixed optical signal via an optical fiber.

In a possible implementation method, the communication unit is an external multiplexer/demultiplexer module.

In a possible implementation method, the signal conversion module further includes: a gold finger connector, configured to be connected to a core switch; and an optical fiber interface, configured to be connected to an optical fiber that transmits the first mixed optical signal. The signal conversion module is connected to the core switch by the gold finger connector, so that the number of optical fibers used can be effectively reduced, and maintenance is facilitated by inserting and pulling.

According to a second aspect, an embodiment of this application provides a signal conversion method. The method may be executed by a signal conversion module or by part of the modules in the signal conversion module. An executing entity of the method is not limited in this application. The method includes: receiving at least two first electrical signals; converting the at least two first electrical signals into at least two first optical signals, where the at least two first optical signals respectively correspond to different wavelengths; multiplexing the at least two first optical signals into a first mixed optical signal; and transmitting the first mixed optical signal.

The above solution may be executed by a signal conversion module or by part of modules in the signal conversion module, and the signal conversion module does not need to be deployed in a dedicated low voltage room (some organizations even have no low voltage room, and if there is no low voltage room or the environment of the low voltage room is poor, the signal conversion module cannot be deployed, resulting in poor applicability). Therefore, the signal conversion module provided in this application can reduce the operation and maintenance costs and difficulties of low voltage rooms, and achieve high applicability. The signal conversion module may be deployed in an indoor equipment room, so that the signal conversion module is not subject to external temperature, humidity, or lightning weather. This reduces the impact of the natural environment on the signal conversion module, prolongs the service life of the signal conversion module, and reduces replacement and maintenance costs.

In a possible implementation method, a plurality of optical signals in the at least two first optical signals are multiplexed into a third mixed optical signal; a plurality of remaining optical signals in the at least two first optical signals are multiplexed into a fourth mixed optical signal; and the third mixed optical signal and the fourth mixed optical signal are multiplexed into the first mixed optical signal.

In this solution, the at least two first optical signals are divided into two parts, and the two parts of first optical signals are separately processed, improving the efficiency for multiplexing the at least two optical signals into a mixed signal.

In a possible implementation method, a second mixed optical signal is received; the second mixed optical signal is demultiplexed into at least two second optical signals, where the at least two second optical signals respectively correspond to different wavelengths; the at least two second optical signals are converted into at least two second electrical signals; and the at least two second electrical signals are transmitted.

The above solution may be executed by a signal conversion module or by part of modules in the signal conversion module, and the signal conversion module does not need to be deployed in a dedicated low voltage room (some organizations even have no low voltage room, and if there is no low voltage room or the environment of the low voltage room is poor, the signal conversion module cannot be deployed, resulting in poor applicability). Therefore, the signal conversion module provided in this application can reduce the operation and maintenance costs and difficulties of low voltage rooms, and achieve high applicability. The signal conversion module may be deployed in an indoor equipment room, so that the signal conversion module is not subject to external temperature, humidity, or lightning weather. This reduces the impact of the natural environment on the signal conversion module, prolongs the service life of the signal conversion module, and reduces replacement and maintenance costs.

In a possible implementation method, a fifth mixed optical signal is received, where the fifth mixed optical signal includes a second mixed optical signal and an interference optical signal; and the interference optical signal is filtered out.

The above solution can effectively eliminate the interference optical signal to obtain an accurate second mixed optical signal.

In a possible implementation method, the interference signal is filtered out by using a single optical filter or the interference signal is filtered out by using a plurality of optical filters based on the second mixed optical signal.

The above solution can effectively eliminate the interference optical signal to obtain an accurate second mixed optical signal.

According to a third aspect, an embodiment of this application further provides an optical fiber transmission system, including:
a core switch, configured to provide at least two first electrical signals to a signal conversion module and receive at least two first electrical signals transmitted by an aggregation module;
the signal conversion module, configured to receive the at least two first electrical signals provided by the core switch, generate at least two first optical signals based on the at least two first electrical signals, multiplex the at least two optical signals into a first mixed optical signal, transmit the first mixed optical signal to a remote access module, receive a second mixed optical signal transmitted by the remote access module, demultiplex the second mixed optical module into at least two second optical signals, convert the at least two second optical signals into at least two electrical signals, and transmit the at least two electrical signals to the core switch;
the remote access module, configured to receive the first mixed optical signal transmitted by the signal conversion module, demultiplex the first mixed optical signal into at least two third optical signals, transmit the at least two third optical signals to at least two remote optical modules, receive at least two fourth optical signals transmitted by the at least two remote optical modules, and multiplex the at least two fourth optical signals into the second mixed optical signal;
the at least two remote optical modules, configured to receive the at least two third optical signals, generate at least two third electrical signals based on the at least two received third optical signals, transmit the at least two third electrical signals to at least two access switches, receive at least two fourth electrical signals transmitted by the access switches, generate at least two fourth optical signals based on the at least two fourth electrical signals, and transmit the at least two fourth optical signals to the at least two remote access modules; and
the at least two access switches, configured to receive the at least two third electrical signals transmitted by the remote optical modules, and transmit the at least two fourth electrical signals to the remote optical modules.

According to a fourth aspect, an embodiment of this application further provides a computer-readable storage medium, where the computer-readable storage medium stores a computer-readable instruction, and when the computer-readable instruction is executed by a computer, any method according to the second aspect is implemented.

### BRIEF DESCRIPTION OF DRAWINGS

To describe the technical solutions in the embodiments of this application more clearly, the following briefly describes the accompanying drawings for describing the embodiments. Apparently, the accompanying drawings in the following descriptions show merely some embodiments of this application, and persons of ordinary skill in the art may still derive other drawings from these accompanying drawings without creative efforts.
FIG. 1 is a schematic structural diagram of a signal conversion module according to an embodiment of this application;
FIG. 2 is a schematic diagram of a correspondence between a first electrical signal and a first optical signal according to an embodiment of this application;
FIG. 3 is a schematic diagram of a correspondence between a second electrical signal and a second optical signal according to an embodiment of this application;
FIG. 4 is a schematic structural diagram of a processing unit according to an embodiment of this application;
FIG. 5 is a schematic structural diagram of a processing unit according to an embodiment of this application;
FIG. 6 is a schematic structural diagram of a processing unit according to an embodiment of this application;
FIG. 7 is a schematic structural diagram of a processing unit according to an embodiment of this application;
FIG. 8 is a schematic structural diagram of a processing unit according to an embodiment of this application;
FIG. 9 is a schematic diagram of a working principle of an optical filter according to an embodiment of this application;
FIG. 10 is a schematic structural diagram of a processing unit according to an embodiment of this application;
FIG. 11 is a schematic architecture diagram of optical fiber transmission implemented by a core switch in the related art;
FIG. 12 shows an integrated color-light optical module according to an embodiment of this application;
FIG. 13 is a schematic diagram of a connection between an integrated color-light optical module and a core switch according to an embodiment of this application;
FIG. 14 is a schematic diagram of a remote access module connected to an integrated color-light optical module according to an embodiment of this application;
FIG. 15 is a schematic structural diagram of a campus network according to an embodiment of this application;
FIG. 16 is a schematic diagram of connections between components of a campus network according to an embodiment of this application;
FIG. 17 is a schematic diagram of an interaction process of components of a campus network according to an embodiment of this application;
FIG. 18 is a schematic diagram of an interaction process of components of a campus network according to an embodiment of this application;
FIG. 19 is a schematic structural diagram of a core switch according to an embodiment of this application;
FIG. 20 is a schematic structural diagram of an indoor switch according to an embodiment of this application;
FIG. 21 is a schematic flowchart of a signal conversion method according to an embodiment of this application;
FIG. 22 is a schematic flowchart of a signal conversion method according to an embodiment of this application; and
FIG. 23 is a schematic structural diagram of a signal conversion apparatus according to an embodiment of this application.

### DESCRIPTION OF EMBODIMENTS

In the following embodiments of this application, the term "and/or" is used to describe an association relationship between associated objects, and indicates that three relationships may be present. For example, A and/or B may represent the following cases: presence of only A; presence of both A and B; and presence of only B; where A and B may each be singular or plural. The character "/" generally indicates an "or" relationship between contextually associated objects. "at least one (a) of the following items" or similar expressions are intended to include arbitrary combinations of these items, including one (an) item or arbitrary combinations of a plurality of (multiple) items. For example, at least one of (a/an) a, b, or c may mean: a, b, c, a-b, a-c, b-c, or a-b-c, where a, b, and c may each be singular or plural. Singular expression forms "one", "a", "the", "the foregoing", "this", and "this one" are intended to also include an expression form such as "one or more", unless otherwise expressly oppositely specified in the context. In addition, unless otherwise oppositely specified, the ordinal numerals such as "first" and "second" mentioned in the embodiments of this application are used to distinguish a plurality of objects rather than to limit a sequence, a time sequence, a priority, or a degree of importance of the plurality of objects.

Referring to "an embodiment", "some embodiments", or the like as described in the specification of this application means that one or more embodiments of this application include a specific feature, structure, or characteristic described with reference to the embodiment(s). Therefore, expressions such as "in an embodiment", "in some embodiments", "in some other embodiments", and "in still some other embodiments" appearing in different places in this specification do not inevitably refer to a same embodiment, but mean "one or more but not all embodiments", unless otherwise emphasized in another way. The terms "include", "comprise", "have", and variants thereof all mean "including but not limited to", unless otherwise specially emphasized in another way.

To make the objectives, technical solutions, and advantages of this application clearer, the following further describes this application in detail with reference to the accompanying drawings. Apparently, the described embodiments are merely some but not all of the embodiments of this application. All other embodiments obtained by persons of ordinary skill in the art based on the embodiments of this application without creative efforts shall fall within the protection scope of this application.

With the development of communication technologies, the number of users accessing network is increasing, and the users are imposing increasingly high requirements on the network data transmission rate. Therefore, a three-layer networking architecture including a core-layer network device, an aggregation-layer network device and an access-layer network device has been widely used in network design, providing users with a safe, reliable, scalable, and cost-effective interconnected network. The aggregation-layer network device, as a physical entity of an aggregation layer, has a main function of aggregating data from the access-layer network device and then forwarding the data to the core-layer network device, thereby alleviating the load of the core-layer network device.

In three-layer network architectures, core-layer network devices are typically deployed in data center equipment rooms of places such as campuses and hospitals; aggregation-layer network devices are usually active devices and are generally deployed in low voltage rooms of various buildings in places such as campuses and hospitals; and access-layer network devices are typically deployed in low voltage rooms or floors of various buildings in places such as campuses and hospitals. When a large number of aggregation-layer network devices are deployed in low voltage room areas, active power supply is required, which usually imposes high requirements on low voltage rooms, and brings certain potential risks in deployment, operation and maintenance. For example, if the places such as campuses and hospitals have no low voltage room or the environment of the low voltage room is poor, the aggregation-layer network devices cannot be deployed, resulting in poor applicability. Or, if the aggregation-layer network devices need to share this low voltage room area with other devices, issues such as strong power management, operation and maintenance permissions, and disorder of devices may arise.

Embodiments of this application provide a signal conversion module and a signal conversion method to solve the problem of high complexity in deployment of low voltage rooms. The following further describes the embodiments of this application with reference to the accompanying drawings in the specification.

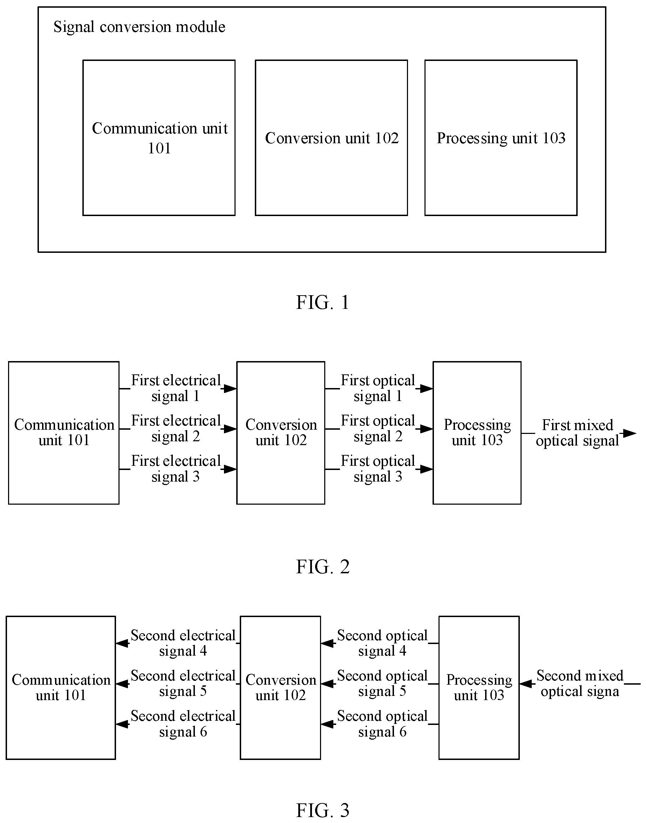

FIG. 1 shows a signal conversion module according to an embodiment of this application. The signal conversion module includes: a communication unit 101, a conversion unit 102, and a processing unit 103. The communication unit 101 is configured to receive at least two first electrical signals. The conversion unit 102 is configured to convert the at least two first electrical signals into at least two first optical signals, and the at least two first optical signals respectively correspond to different wavelengths. The processing unit 103 is configured to multiplex the at least two first optical signals into a first mixed optical signal. The communication unit 101 is further configured to transmit the first mixed optical signal.

In a possible implementation method, the signal conversion module may be arranged at an aggregation-layer network device side. The signal conversion module is a passive network device, and the signal conversion module does not need to be deployed in a dedicated low voltage room. Therefore, the signal conversion module provided in this application can reduce the operation and maintenance costs and difficulties of low voltage rooms, and achieve high applicability. In addition, the signal conversion module may be deployed in an indoor equipment room, so that the signal conversion module is not subject to external temperature, humidity, or lightning weather. This reduces the impact of the natural environment on the signal conversion module, prolongs the service life of the signal conversion module, and reduces replacement and maintenance costs.

In a possible implementation method, the communication unit 101 is configured to receive at least two first electrical signals transmitted from at least two communication devices (such as access switches).

In a possible implementation method, the communication unit 101 is configured to transmit the first mixed optical signal to an optical fiber.

To cooperate with an aggregation-layer network device, a core-layer network device side also requires configuration adjustment. A core-side network device may be provided with both an optical module used for photoelectric conversion and a wavelength division multiplexing/demultiplexing device. However, the core-layer network device side is provided with both the above two types of devices, resulting in a large number of devices, thus leading to a higher complexity in deployment, operation, and maintenance. A large number of optical fibers are also required between the optical modules plugged into the core-layer network device and the wavelength division multiplexing/demultiplexing device, resulting in a higher complexity in deployment.

In a possible implementation method, the signal conversion module may be arranged at the core-layer network device side to cooperate with the aggregation-layer network device. Compared to separately deploying the optical module and the wavelength division multiplexing/demultiplexing device of the core-layer network device side, integrating the communication unit, the conversion unit, and the processing unit into one signal conversion module can reduce the number of devices deployed at the core-layer network device side and also reduces optical fiber deployed between the optical module of the core-layer network device side and the wavelength division multiplexing/demultiplexing device, thereby achieving simple operation and maintenance management. The signal conversion module is a passive network device, and the signal conversion module does not need to be deployed in a dedicated low voltage room. Therefore, the signal conversion module provided in this application can reduce the operation and maintenance costs and difficulties of low voltage rooms, and achieve high applicability. In addition, the signal conversion module may be deployed in an indoor equipment room, so that the signal conversion module is not subject to external temperature, humidity, or lightning weather. This reduces the impact of the natural environment on the signal conversion module, prolongs the service life of the signal conversion module, and reduces replacement and maintenance costs.

In a possible implementation method, the communication unit 101 is configured to receive at least two first electrical signals transmitted from a communication device (such as a core switch).

In a possible implementation method, at least two first electrical signals are in one-to-one correspondence with at least two first optical signals. For example, as shown in FIG. 2, the conversion unit 102 receives three first electrical signals from the communication unit 101, including a first electrical signal 1, a first electrical signal 2, and a first electrical signal 3. Then, the conversion unit 102 converts the first electrical signal 1 into a first optical signal 1, the conversion unit 102 converts the first electrical signal 2 into a first optical signal 2, and the conversion unit 102 converts the first electrical signal 3 into a first optical signal 3, where the first optical signal 1, the first optical signal 2, and the first optical signal 3 have different wavelengths.

In a possible implementation method, based on a wavelength range of a coarse wavelength division multiplexing (CWDM) technology, a wavelength range of the first optical signals is 1271 nanometers to 1411 nanometers, and a center wavelength spacing corresponding to at least two first optical signals is 20 nanometers. Certainly, this wavelength spacing may also be within another range, which is not limited in this application. Based on a wavelength range of a dense wavelength division multiplexing (DWDM) technology, the wavelength range of the first optical signals is 1525 nanometers to 1565 nanometers, and a wavelength spacing corresponding to at least two first optical signals is 0.2 nanometer to 1.2 nanometers, which may specifically be 0.8 nanometer. Certainly, this wavelength spacing may also be within another range, which is not limited in this application.

In a possible implementation method, based on the wavelength range of the coarse wavelength division multiplexing technology, the communication unit 101 may receive eight first electrical signals, and the conversion unit 102 converts the eight first electrical signals into eight first optical signals, where the 1st first optical signal has a wavelength of 1271 nanometers, the 2nd first optical signal has a wavelength of 1291 nanometers, the 3rd first optical signal has a wavelength of 1311 nanometers, the 4th first optical signal has a wavelength of 1331 nanometers, the 5th first optical signal has a wavelength of 1351 nanometers, the 6th first optical signal has a wavelength of 1371 nanometers, the 7th first optical signal has a wavelength of 1391 nanometers, and the 8th first optical signal has a wavelength of 1411 nanometers.

In a possible implementation method, based on the wavelength range and the wavelength spacing of the CWDM technology, the communication unit 101 may also receive nine first electrical signals. Specifically, the communication unit 101 may receive any number of first electrical signals as long as the number is less than or equal to nine.

In a possible implementation method, based on the wavelength range and the wavelength spacing of the DWDM technology, the communication unit 101 may also receive 80 first electrical signals. Specifically, the communication unit 101 may receive any number of first electrical signals as long as the number is less than or equal to 80.

Certainly, the wavelength range is not limited in this application either. This application may also adopt a wavelength range of a multi-wavelength division multiplexing (MWDM) technology or other types of wavelength division multiplexing technologies.

In a possible implementation method, the communication unit 101 is further configured to receive a second mixed optical signal; the processing unit 103 is further configured to demultiplex the second mixed optical signal into at least two second optical signals, where the at least two second optical signals respectively correspond to different wavelengths; the conversion unit 102 is further configured to convert the at least two second optical signals into at least two second electrical signals; and the communication unit 101 is further configured to transmit the at least two second electrical signals.

In a possible implementation method, the communication unit 101 receives the second mixed optical signal from an optical fiber.

In a possible implementation method, when the signal conversion module is arranged at the aggregation-layer network device side, the communication unit 101 transmits at least two second electrical signals to at least two communication devices such as access switches.

In a possible implementation method, when the signal conversion module is arranged at the core-layer network device side, the communication unit 101 transmits at least two second electrical signals to a communication device such as a core switch.

In a possible implementation method, the first mixed optical signal and the second mixed optical signal are both transmitted on one optical fiber, that is, optical signals are both received and transmitted in one optical fiber.

The above solution may be executed by a signal conversion module or by part of modules in the signal conversion module, and the signal conversion module does not need to be deployed in a dedicated low voltage room (some organizations even have no low voltage room, and if there is no low voltage room or the environment of the low voltage room is poor, the signal conversion module cannot be deployed, resulting in poor applicability). Therefore, the signal conversion module provided in this application can reduce the operation and maintenance costs and difficulties of low voltage rooms, and achieve high applicability. The signal conversion module may be deployed in an indoor equipment room, so that the signal conversion module is not subject to external temperature, humidity, or lightning weather. This reduces the impact of the natural environment on the signal conversion module, prolongs the service life of the signal conversion module, and reduces replacement and maintenance costs. In addition, according to the signal conversion module in the embodiments of this application, the internal conversion unit converts a plurality of electrical signals into one mixed optical signal. Compared with a way of separately deploying the optical modules of the core-layer network device side and the wavelength division multiplexing/demultiplexing device, the way in this application may significantly reduce the number of connection between the optical modules of the core-layer network device side and the wavelength division multiplexing/demultiplexing devices and the networking complexity, simplify layout of optical fiber connection and reduce space occupied by networking, thereby reducing construction costs, improving maintainability, and improving product quality reliability.

In a possible implementation method, at least two second electrical signals are in one-to-one correspondence with at least two second optical signals. For example, as shown in FIG. 3, the conversion unit 102 receives three second optical signals from the processing unit 103, including a second optical signal 4, a second optical signal 5, and a second optical signal 6. Then, the conversion unit 102 converts the second optical signal 4 into a second electrical signal 4, the conversion unit 102 converts the second optical signal 5 into a second electrical signal 5, and the conversion unit 102 converts the second optical signal 6 into a second electrical signal 6, where the second optical signal 4, the second optical signal 5, and the second optical signal 6 have different wavelengths.

In a possible implementation method, based on the wavelength range of the CWDM technology, a wavelength range of the second optical signals is 1431 nanometers to 1571 nanometers, and a wavelength spacing corresponding to at least two second optical signals is 20 nanometers. Certainly, this wavelength spacing may also be within another range, which is not limited in this application. Based on the wavelength range of the DWDM technology, the wavelength range of the second optical signals is 1570 nanometers to 1610 nanometers, and a wavelength spacing corresponding to at least two first optical signals is 0.2 nanometer to 1.2 nanometers, which may specifically be 0.8 nanometer.

In a possible implementation method, based on the wavelength range of the CWDM technology, the communication unit 101 receives a second mixed optical signal, and the processing unit 103 demultiplexes the second mixed optical signal into eight second optical signals, where the 1st second optical signal has a wavelength of 1431 nanometers, the 2nd second optical signal has a wavelength of 1451 nanometers, the 3rd second optical signal has a wavelength of 1471 nanometers, the 4th second optical signal has a wavelength of 1491 nanometers, the 5th second optical signal has a wavelength of 1511 nanometers, the 6th second optical signal has a wavelength of 1531 nanometers, the 7th second optical signal has a wavelength of 1551 nanometers, and the 8th second optical signal has a wavelength of 1571 nanometers.

In a possible implementation method, based on the wavelength range and the wavelength spacing of the CWDM technology, the processing unit 103 demultiplexes the second mixed optical signal into nine second optical signals, and the number of signals obtained after the second mixed optical signal is demultiplexed is not limited in this application.

In a possible implementation method, based on the wavelength range and the wavelength spacing of the DWDM technology, the processing unit 103 may also demultiplex the second mixed optical signal into 80 second optical signals, and the number of signals obtained after the second mixed optical signal is demultiplexed is not limited in this application.

Certainly, the wavelength range is not limited in this application either. This application may also adopt a wavelength range of the MWDM technology or other types of wavelength division multiplexing technologies.

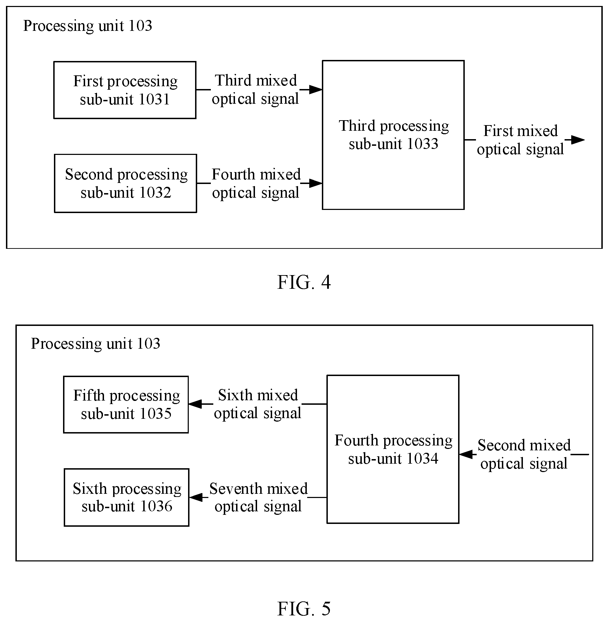

In a possible implementation method, as shown in FIG. 4, the processing unit 103 includes a first processing sub-unit 1031, a second processing sub-unit 1032, and a third processing sub-unit 1033. The first processing sub-unit 1031 is configured to multiplex a first sub-optical signal and a second sub-optical signal in at least two first optical signals into a third mixed optical signal. The second processing sub-unit 1032 is configured to multiplex a third sub-optical signal and a fourth sub-optical signal in at least two first optical signals into a fourth mixed optical signal. The third processing sub-unit 1033 is configured to multiplex the third mixed optical signal and the fourth mixed optical signal into the first mixed optical signal. The third processing sub-unit is a type of multiplexer (MUX), and may also be another component including a MUX module, for example, a device adopting a coarse wavelength division multiplexing technology or a device adopting a dense wavelength division multiplexing technology. In this solution, the processing unit is divided into a plurality of processing sub-units, and each processing sub-unit implements the multiplexing of some optical signals, thereby reducing the complexity of the manufacturing process.

In a possible implementation method, as shown in FIG. 5, the processing unit 103 includes a fourth processing sub-unit 1034, a fifth processing sub-unit 1035, and a sixth processing sub-unit 1036. The fourth processing sub-unit 1034 is configured to demultiplex a second mixed optical signal into a sixth mixed optical signal and a seventh mixed optical signal. The fifth processing sub-unit 1035 is configured to demultiplex the sixth mixed optical signal into a fifth sub-optical signal and a sixth sub-optical signal in at least two second optical signals. The sixth processing sub-unit 1036 is configured to demultiplex the seventh mixed optical signal into a seventh sub-optical signal and an eighth sub-optical signal in at least two second optical signals. The fourth processing sub-unit is a type of demultiplexer (DEMUX), and may also be another component including a DEMUX module, for example, a device adopting a coarse wavelength division multiplexing technology or a device adopting a dense wavelength division multiplexing technology.

In a possible implementation method, an example in which the communication unit 101 may receive eight first electrical signals is used for describing the structure of the processing unit 103.

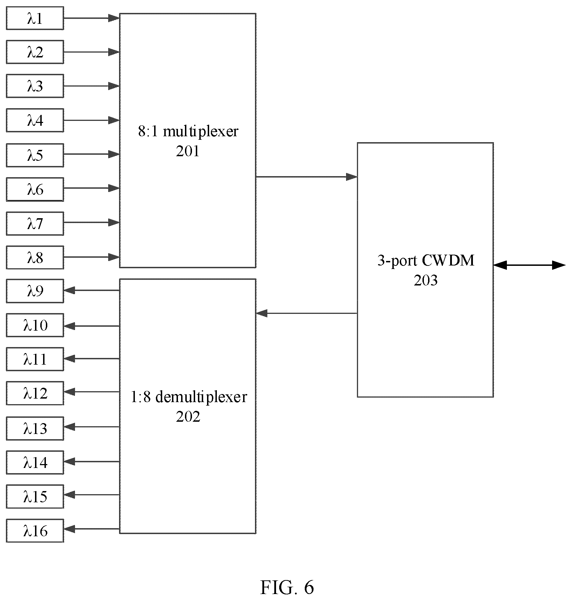

In a possible implementation method, a schematic structural diagram of the processing unit 103, as shown in FIG. 6, includes: an 8:1 multiplexer 201, a 1:8 demultiplexer 202, and a 3-port CWDM 203.

The communication unit 101 is configured to receive eight first electrical signals. The conversion unit 102 is configured to convert the eight first electrical signals into eight first optical signals, which are respectively a 1st first optical signal, with a wavelength of λ₁; a 2nd first optical signal, with a wavelength of λ₂; a 3rd first optical signal, with a wavelength of λ₃; a 4th first optical signal, with a wavelength of λ₄; a 5th first optical signal, with a wavelength of λ₅; a 6th first optical signal, with a wavelength of λ₆; a 7th first optical signal, with a wavelength of λ₇; and an 8th first optical signal, with a wavelength of λ₈. The 8:1 multiplexer 201 in the processing unit 103 is configured to multiplex the eight first optical signals into the first mixed optical signal. The 3-port CWDM device 203 in the processing unit 103 is configured to receive the first mixed optical signal from the 8:1 multiplexer 201 and transmit the first mixed optical signal to the communication unit 101. In addition to the 3-port CWDM device, the unit 203 may use MUX2:1/DEMUX1:2, and certainly may be another device such as a device transmitting and receiving optical signals. This is not limited in this application.

The communication unit 101 is further configured to receive a second mixed optical signal. The 3-port CWDM device 203 in the processing unit 103 is further configured to receive a second mixed optical signal from the communication unit 101 and transmit the second mixed optical signal to the 1:8 demultiplexer 202. The 1:8 demultiplexer 202 in the processing unit 103 is further configured to demultiplex the second mixed optical signal into eight second optical signals, which are respectively a 1st second optical signal, with a wavelength of λ₉; a 2nd second optical signal, with a wavelength of λ₁₀; a 3rd second optical signal, with a wavelength of λ₁₁; a 4th second optical signal, with a wavelength of λ₁₂; a 5th second optical signal, with a wavelength of λ₁₃; a 6th second optical signal, with a wavelength of λ₁₄; a 7th second optical signal, with a wavelength of λ₁₅; and an 8th second optical signal, with a wavelength of λ₁₆. The conversion unit 102 is further configured to convert the eight second optical signals into eight second electrical signals.

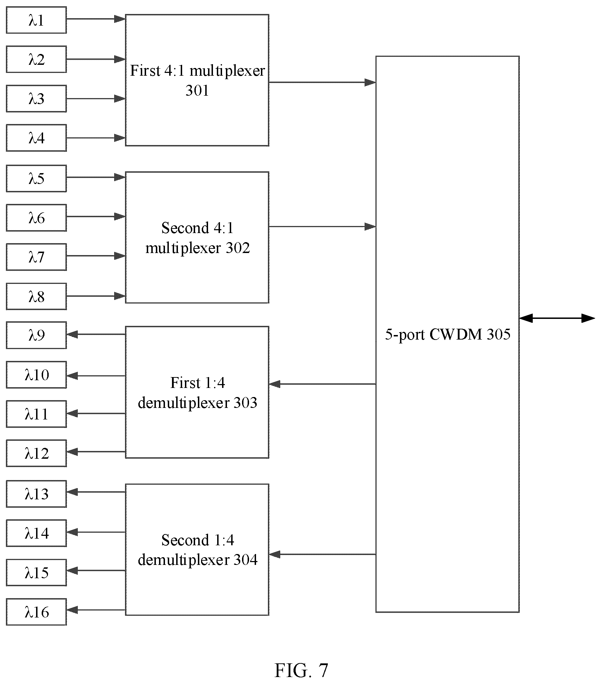

In another possible implementation method, a schematic structural diagram of the processing unit 103, as shown in FIG. 7, includes: two 4:1 multiplexers, which are respectively a first 4:1 multiplexer 301 and a second 4:1 multiplexer 302; two 1:4 demultiplexers, which are respectively a first 1:4 demultiplexer 303 and a second 1:4 demultiplexer 304; and a 5-port CWDM device 305. The first 4:1 multiplexer 301 corresponds to the first processing sub-unit 1031. The second 4:1 multiplexer 302 corresponds to the second processing sub-unit 1032. The first 1:4 demultiplexer 303 corresponds to the fifth processing sub-unit 1035. The second 1:4 demultiplexer 304 corresponds to the sixth processing sub-unit 1036. The CWDM device 305 corresponds to the third processing sub-unit 1033 and the fourth processing sub-unit 1034. In addition to the 5-port CWDM device, the unit 305 may use MUX4:1/DEMUX1:4, and certainly may be another device such as a device transmitting and receiving optical signals. This is not limited in this application.

In a possible implementation method, the communication unit 101 is configured to receive eight first electrical signals. The conversion unit 102 is configured to convert the eight first electrical signals into eight first optical signals, and wavelengths of the eight first optical signals are respectively λ₁, λ₂, λ₃, λ₄, λ₅, λ₆, λ₇, and λ₈. The first 4:1 multiplexer 301 in the processing unit 103 is configured to multiplex first optical signals that respectively correspond to λ₁, λ₂, λ₃, and λ₄ into a third mixed optical signal. The second 4:1 multiplexer 302 in the processing unit 103 is configured to multiplex first optical signals that respectively correspond to λ₅, λ₆, λ₇, and λ₈ into a fourth mixed optical signal. The third mixed optical signal and the fourth mixed optical signal are transmitted to the 5-port CWDM device 305. The 5-port CWDM device 305 multiplexes the third mixed optical signal and the fourth mixed optical signal into a first mixed optical signal and transmits the first mixed optical signal to the communication unit 101.

In a possible implementation method, the communication unit 101 is further configured to receive a second mixed optical signal. The 5-port CWDM device 305 in the processing unit 103 is further configured to demultiplex the second mixed optical signal into a sixth mixed optical signal and a seventh mixed optical signal. The first 1:4 demultiplexer 303 in the processing unit 103 is further configured to demultiplex the sixth mixed optical signal into second optical signals that respectively correspond to λ₉, λ₁₀, λ₁₁, and λ₁₂. The second 1:4 demultiplexer 304 in the processing unit 103 is further configured to demultiplex the seventh mixed optical signal into second optical signals that respectively correspond to λ₁₃, λ₁₄, λ₁₅, and λ₁₆. The conversion unit 102 is further configured to convert eight second optical signals into eight second electrical signals.

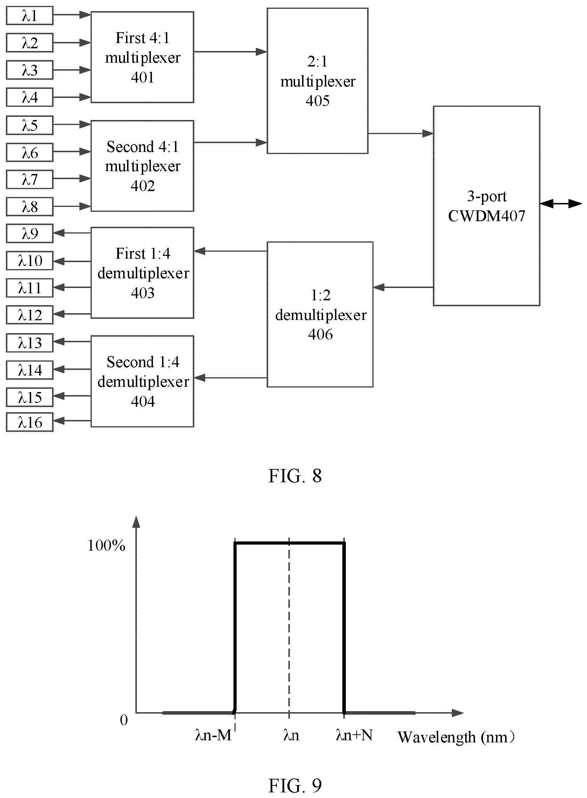

In another possible implementation method, a schematic structural diagram of the processing unit 103, as shown in FIG. 8, includes: two 4:1 multiplexers, which are respectively a first 4:1 multiplexer 401 and a second 4:1 multiplexer 402; two 1:4 demultiplexers, which are respectively a first 1:4 demultiplexer 403 and a second 1:4 demultiplexer 404; a 2:1 multiplexer 405; a 1:2 demultiplexer 406; and a 3-port CWDM device 407. The first 4:1 multiplexer 401 corresponds to the first processing sub-unit 1031. The second 4:1 multiplexer 402 corresponds to the second processing sub-unit 1032. The 2:1 multiplexer 405 corresponds to the third processing sub-unit 1033. The first 1:4 demultiplexer 403 corresponds to the fifth processing sub-unit 1035. The second 1:4 demultiplexer 404 corresponds to the sixth processing sub-unit 1036. The 1:2 demultiplexer 406 corresponds to the fourth processing sub-unit 1034. In addition to the 3-port CWDM device, the unit 407 may use MUX2:1/DEMUX1:2, and certainly may be another device such as a device transmitting and receiving optical signals. This is not limited in this application.

In a possible implementation method, the communication unit 101 is configured to receive eight first electrical signals. The conversion unit 102 is configured to convert the eight first electrical signals into eight first optical signals, and wavelengths of the eight first optical signals are respectively λ₁, λ₂, λ₃, λ₄, λ₅, λ₆, λ₇, and λ₈. The first 4:1 multiplexer 401 in the processing unit 103 is configured to multiplex first optical signals that respectively correspond to λ₁, λ₂, λ₃, and λ₄ into a third mixed optical signal. The second 4:1 multiplexer 402 in the processing unit 103 is configured to multiplex first optical signals that respectively correspond to λ₅, λ₆, λ₇, and λ₈ into a fourth mixed optical signal. The third mixed optical signal and the fourth mixed optical signal are transmitted to the 2:1 multiplexer 405. The 2:1 multiplexer 405 multiplexes the third mixed optical signal and the fourth mixed optical signal into a first mixed optical signal and transmits the first mixed optical signal to the 3-port CWDM device 407. The 3-port CWDM device 407 transmits the first mixed optical signal to the communication unit 101.

In a possible implementation method, the communication unit 101 is further configured to receive a second mixed optical signal and transmit the second mixed optical signal to the 3-port CWDM device 407. The 3-port CWDM device 407 is configured to receive the second mixed optical signal and transmit the second mixed optical signal to the 1:2 demultiplexer 406. The 1:2 demultiplexer 406 is configured to demultiplex the second mixed optical signal into a sixth mixed optical signal and a seventh mixed optical signal. The first 1:4 demultiplexer 403 is configured to demultiplex the sixth mixed optical signal into second optical signals that respectively correspond to λ₉, λ₁₀, λ₁₁, and λ₁₂. The second 1:4 demultiplexer 404 is configured to demultiplex the seventh mixed optical signal into second optical signals that respectively correspond to λ₁₃, λ₁₄, λ₁₅, and λ₁₆. The conversion unit 102 is further configured to convert eight second optical signals into eight second electrical signals.

In a possible implementation method, the communication unit 101 is further configured to receive a second mixed optical signal and is specifically configured to receive a fifth mixed optical signal, where the fifth mixed optical signal includes a second mixed optical signal and interference optical signal; and the processing unit 103 includes an optical filter, where the optical filter is configured to filter out the interference optical signal. This solution can effectively eliminate the interference optical signal to obtain an accurate second mixed optical signal.

In a possible implementation method, the interference signal is filtered out by using a single optical filter or the interference signal is filtered out by using a plurality of optical filters based on the second mixed optical signal.

In a possible implementation method, the processing unit 103 includes a single optical filter, and this optical filter allows the second mixed optical signal to pass through and reflects the interference optical signal. Specifically, the second mixed optical signal is an optical signal within a specified range. The processing unit 103 includes a single optical filter, and this single optical filter can allow optical signals within the range of the second mixed optical signal to pass through, and filter out optical signals beyond the range of the second mixed optical signal. Specifically, the second mixed optical signal includes optical signals of 9 wavelengths. The single optical filter can allow the optical signals of these 9 wavelengths to pass through, and filter out optical signals that do not belong to these 9 wavelengths.

In a possible implementation method, the processing unit 103 includes a plurality of optical filters, where some of the plurality of optical filters allow one second optical signal in the second mixed optical signal to pass through, and reflect the other optical signals; and the other optical filters of the plurality of optical filters allow a plurality of second optical signals in the second mixed optical signal to pass through, and reflect the other optical signals. Specifically, the processing unit 103 includes 4 optical filters. A first optical filter and a second optical filter can be combined to allow a 1st second optical signal that corresponds to a wavelength of λ₁₀ to pass through; a third optical filter can allow the 1st second optical signal that corresponds to wavelengths from λ₁₀ to λ₁₂ to pass through; and a fourth optical filter can allow the 1st second optical signal that corresponds to the remaining wavelengths of the second mixed optical signals to pass through.

In a possible implementation method, the processing unit 103 includes a plurality of optical filters, where some of the plurality of optical filters allow one second optical signal in the second mixed optical signals to pass through, and reflect the other optical signals; and the other optical filters of the plurality of optical filters allow a plurality of second optical signals in the second mixed optical signals to pass through, and reflect the other optical signals. For example, there are a 1st second optical signal, with a wavelength of λ₉; a 2nd second optical signal, with a wavelength of λ₁₀; a 3rd second optical signal, with a wavelength of λ₁₁; a 4th second optical signal, with a wavelength of λ₁₂; a 5th second optical signal, with a wavelength of λ₁₃; and a 6th second optical signal, with a wavelength of λ₁₄. The processing unit 103 includes 4 optical filters. A first optical filter can allow the 1st second optical signal that corresponds to the wavelength of λ₉ to pass through; a second optical filter can allow the 2nd second optical signal that corresponds to the wavelength of λ₁₀ to pass through; a third optical filter can allow the 3rd second optical signal that corresponds to the wavelength of λ₁₁ and the 4th second optical signal that corresponds to the wavelength of λ₁₂ to pass through; and a fourth optical filter can allow the 5th second optical signal and the 6th second optical signal that correspond to the remaining wavelengths λ₁₃ and λ₁₄ of the second mixed optical signals to pass through.

In a possible implementation method, the processing unit 103 includes a plurality of optical filters, and each optical filter allows one second optical signal in the second mixed optical signals to pass through and reflect the other optical signals. Specifically, the processing unit 103 includes a plurality of optical filters. For example, each optical signal corresponds to one optical filter, and this optical filter allows optical signals corresponding to a wavelength of this optical signal to pass through and reflect optical signals of the other wavelengths. For example, there are a 1st second optical signal with a wavelength of λ₉ and a 2nd second optical signal with a wavelength of λ₁₀. Accordingly, the processing unit 103 includes two optical filters: a first optical filter and a second optical filter. The first optical filter allows the 1st second optical signal that corresponds to the wavelength of λ₉ to pass through and reflects optical signals of the other wavelengths. The second optical filter allows the 2nd second optical signal that corresponds to the wavelength of λ₁₀ to pass through and reflects optical signals of the other wavelengths.

In a possible implementation method, the processing unit 103 includes a plurality of optical filters, and each optical filter allows a plurality of second optical signals in the second mixed optical signals to pass through and reflect the other optical signals. For example, there are a 1st second optical signal, with a wavelength of λ₉; a 2nd second optical signal, with a wavelength of λ₁₀; a 3rd second optical signal, with a wavelength of λ₁₁; and a 4th second optical signal, with a wavelength of λ₁₂. Accordingly, the processing unit 103 includes two optical filters: a first optical filter and a second optical filter. The first optical filter allows the 1st second optical signal that corresponds to the wavelength of λ₉ and the 2nd second optical signal that corresponds to the wavelength of λ₁₀ to pass through, and reflects optical signals of the other wavelengths. The second optical filter allows the 3rd second optical signal that corresponds to the wavelength of λ₁₁ and the 4th second optical signal that corresponds to the wavelength of λ₁₂ to pass through, and reflects optical signals of the other wavelengths.

In a possible implementation method, the optical filter allows optical signals of wavelengths within a first wavelength range to pass through and reflects optical signals of the other wavelengths. For example, the optical filter allows optical signals corresponding to a wavelength of λₙ to pass through. Therefore, the first wavelength range is [λₙ - *M,* λₙ + *N*]*,* where n is a positive integer, and M and N are greater than 0. For example, M and N are 6.5 nanometers. Certainly, M and N may also be other values, and specific values of M and N are not limited in this application.

In a possible implementation method, as shown in FIG. 9, the optical filter allows optical signals of wavelengths within a first wavelength range to pass through and reflects optical signals of the other wavelengths, meaning that a transmittance of the optical filter for optical signals of wavelengths within the first wavelength range is greater than a first filtering threshold, and a transmittance for optical signals of other wavelengths is less than a second filtering threshold. Specifically, the first filtering threshold may be 100% or 90%, and certainly may also be another value, which is not limited in this application. The second filtering threshold may be 0% or 10%, and certainly may also be another value, which is not limited in this application.

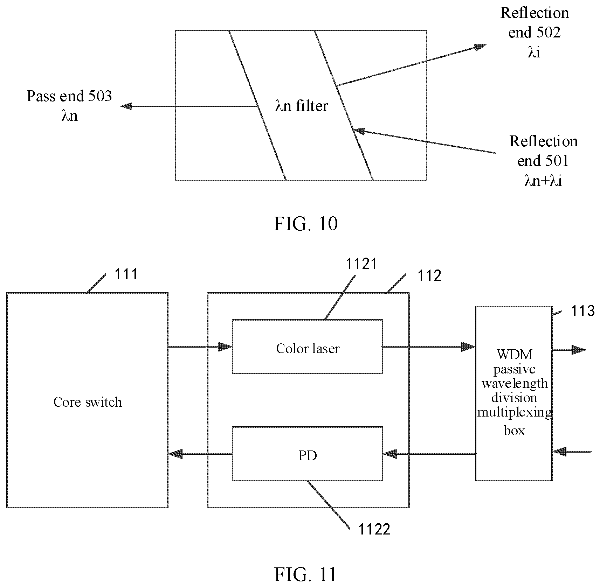

In a possible implementation method, as shown in FIG. 10, the processing unit 103 includes a common end 501, a reflection end 502, a pass end 503, and a λₙ filter. The common end 501 is configured to receive second mixed optical signals and an interference optical signal. The reflection end 502 is configured to receive the interference optical signal and mixed optical signals obtained after optical signals corresponding to a wavelength of λₙ are filtered out from the second mixed optical signals. To be specific, the interference optical signal and the mixed optical signals obtained after optical signals corresponding to a wavelength of λₙ are filtered out from the second mixed optical signals do not pass through the optical filter and are filtered out at the reflection end 502. The pass end 503 is configured to receive the optical signals corresponding to the wavelength of λₙ in the second mixed optical signals. For example, λₙ represents a wavelength of any second optical signal in the second mixed optical signals, and λᵢ represents a wavelength of an optical signal that is filtered out. Accordingly, the common end receives the optical signals corresponding to λₙ and λᵢ. The λₙ optical filter allows optical signals corresponding to the wavelength of λₙ within the first wavelength range to pass through, and the λₙ optical filter reflects the filtered-out optical signals λᵢ. The filtered-out optical signals λᵢ herein refer to the interference optical signal and the mixed optical signals obtained after the optical signals corresponding to the wavelength of λₙ are filtered out from the second mixed optical signals.

In a possible embodiment, a signal conversion module provided in the embodiments of this application is an integrated color-light optical module.

FIG. 11 is a schematic architecture diagram of optical fiber transmission implemented by a core switch in the related art. In the related art, a link between a core-side network device (such as a core switch) to an access-layer network device in a building (such as an access switch) mainly includes: devices such as a core switch 111, traditional hot-pluggable 16-channel CWDM color-light modules 112, and a core-side WDM passive wavelength division multiplexing box 113. The WDM passive wavelength division multiplexing box 113 is fixed to a switch frame. Every two passive wavelength division multiplexing boxes are plugged into one independent fixed fixture frame and then plugged into an access switch frame, and the switch frame is configured to fix the fixture frame.

The core switch is connected to the access switch via an optical module, an optical fiber, and a passive wavelength division device. The core switch generates an electrical signal corresponding to transmission data, and a color laser 1121 in the optical module (such as the 16-channel color-light module 112) is excited by the electrical signal to generate optical signals of a plurality of wave bands. The optical module connected to the core switch includes a plurality of 16-channel color-light modules 112, and each 16-channel color-light module 112 generates optical signals corresponding to one wave band. The optical signals of the plurality of wave bands are multiplexed by a passive wavelength multiplexing device 113 to form one mixed optical signal. The mixed optical signal is transmitted to a wavelength division multiplexing/demultiplexing box corresponding to the access switches via an optical fiber connected to a transmitting port of the passive wavelength multiplexing device 113. The optical signals of the plurality of wave bands are converted into electrical signals by photoelectric detectors (PD) connected to the access switches, and then transmitted to the access switch. The color laser 1121 and the PD are integrated into a hot-pluggable 16-channel CWDM color-light module that is fixed to the core switch in a plug-in manner. The wavelength division multiplexing box is a WDM passive wavelength division multiplexing box, and the passive wavelength division multiplexing box is fixed to an optical distribution frame (ODF).

Each CWDM color-light module 112 includes a color laser 1121 and a PD 1122. The WDM passive wavelength division multiplexing box 113 is connected to each CWDM color-light module 112 via two interfaces, where one interface is connected to the color laser 1121 and configured to receive optical signals transmitted by the color laser 1121, and the other interface is connected to the PD 1122 and configured to transmit demultiplexed optical signals to the PD 1122. After receiving the optical signals transmitted by a plurality of color lasers 1121, the WDM passive wavelength division multiplexing box 113 multiplexes a plurality of optical signals into one mixed optical signal, and the WDM passive wavelength division multiplexing box 113 further demultiplexes a received mixed optical signal into a plurality of optical signals and transmits the plurality of optical signals to the PDs 1122 in the plurality of CWDM color-light modules 112, respectively. The WDM passive wavelength division multiplexing box 113 is connected to the color laser 1121 of the CWDM color-light module 112 via a first optical fiber and is connected to the PD 1122 via a second optical fiber. The WDM passive wavelength division multiplexing box 113 is a passive module, which does not emit laser by itself. Generally, a planar lightwave circuit (PLC) technology is used to just split one beam of light into several beams of light or combine several beams of light into one beam of light.

The CWDM color-light module 112 may generate optical signals of 16 wave bands. The core switch 111 and the CWDM color-light modules 112 are connected in a 16-wavelength hot-pluggable manner, and the CWDM color-light modules 112 are connected to the WDM passive wavelength division multiplexing box 113 via optical fibers. In FIG. 11, in a solution in which the CWDM color-light modules 112, the WDM passive wavelength division multiplexing box 113, and the switch frame are combined, an optical port density of a board card in the switch is low and the board card in the switch is not integrated with a wave division function. In addition, when hot-pluggable CWDM color-light modules 112 of the switch are connected to the WDM passive wavelength division multiplexing box 113, a large number of optical fiber patch cords are required, resulting in a high complexity in connection of a large number of optical fibers, a large installation and maintenance workload, and low maintainability.

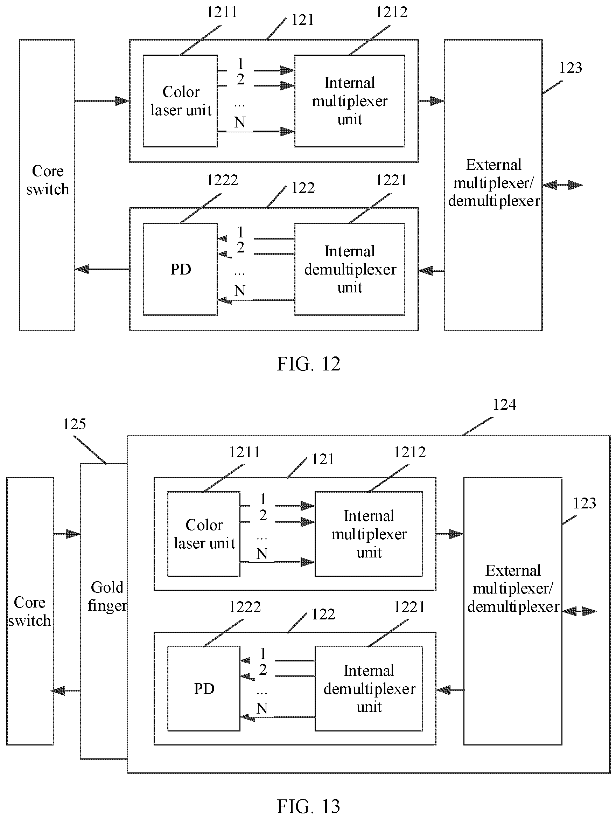

Referring to FIG. 12, FIG. 12 shows an integrated color-light optical module according to an embodiment of this application. The integrated color-light optical module includes: a transmitting module 121 in which a color laser unit 1211 and an internal multiplexer unit 1212 are packaged. The color laser unit 1211 is configured to receive at least two first electrical signals such as a 1st first electrical signal and a 2nd first electrical signal transmitted by a core switch and convert the at least two received first electrical signals into at least two first optical signals. The internal multiplexer unit 1212 is configured to multiplex the at least two first optical signals generated by the color laser unit 1211 into a first mixed optical signal. The first electrical signals are in one-to-one correspondence with the first optical signals. To be specific, the number of the first optical signals is equal to the number of the first electrical signals, and different first optical signals correspond to different wavelengths.

In a possible implementation method, the transmitting module 121 is a transmitting box, and the color laser unit 1211 and the internal multiplexer unit 1212 are packaged into the transmitting box.

In a possible implementation method, the color laser unit 1211 receives N first electrical signals transmitted by the core switch and generates N first optical signals. The N first optical signals have N different center wavelengths, where N is an integer greater than or equal to 2. The internal multiplexer unit 1212 is configured to multiplex the N optical signals into one composite transmitted optical signal.

In a possible implementation method, the internal multiplexer unit 1212 includes a one-stage internal multiplexer or a multi-stage internal multiplexer. When the internal multiplexer unit 1212 includes a one-stage internal multiplexer, at least two first optical signals are multiplexed into a first mixed optical signal by the one-stage internal multiplexer. When the internal multiplexer unit 1212 includes a multi-stage internal multiplexer, at least two first optical signals are multiplexed at least twice by the multi-stage internal multiplexer to obtain a first mixed optical signal. The multi-stage internal multiplexer includes first-stage internal multiplexers and a second-stage internal multiplexer. The first-stage internal multiplexers are configured to multiplex at least two received first optical signals into a plurality of mixed optical signals. There are a plurality of first-stage internal multiplexers, each of which multiplexes the at least two received first optical signals into one mixed optical signal. There may be one or a plurality of second-stage intemal multiplexers. When the internal multiplexer unit is a two-stage structure, there is one second-stage internal multiplexer, which is configured to convert the received mixed optical signals into a first mixed optical signal. When the internal multiplexer unit is a structure with more than two stages, there are a plurality of second-stage internal multiplexers, each of which is configured to multiplex the at least two received mixed optical signals into one mixed optical signal and transmit the one mixed optical signal to the next-stage multiplexer, until the last second-stage internal multiplexer multiplexes the mixed optical signals into the first mixed optical signal.

In a possible implementation method, the color laser unit 1211 includes a plurality of color lasers, and each color laser is configured to generate optical signals of one wave band, that is, to generate optical signals of one center wavelength. The optical signals generated by the plurality of color lasers have different wavelengths. In an example in which the color laser unit 1211 receives N first electrical signals, the number of the color lasers is N and the color lasers are configured to generate N first optical signals. The color laser may be but is not limited to a coarse wavelength division multiplexing CWDM laser or a dense wavelength division multiplexing DWDM laser. When different types of color lasers are used, a spacing between two corresponding adjacent wave bands varies. Taking a CWDM laser as an example, a spacing between two adjacent wave bands is 20 nm. In a possible implementation method, the spacing between two adjacent wave bands transmitted by the color laser unit is n, N wave bands of the transmitted optical signals are continuous wave bands with a spacing of xn, and N wave bands of the received optical signals are continuous wave bands with a spacing of xn, where x is a positive integer. When x is 1, the spacing between every two adjacent wave bands in the N wave bands is n. Taking a CWDM laser as an example, the spacing between two adjacent wave bands is 20 nm. When x is 2, the N wave bands are continuous wave bands with a spacing of 40 nm. When the color laser adopts DWDM, a spacing between every two wave bands is less than 20 nm.

In a possible implementation method, in the N first optical signals, center wavelengths of adjacent first optical signals have a same wavelength spacing. Based on the wavelength range of the CWDM technology, in an example in which N is 8, wavelengths of the N first optical signals are respectively: a wavelength of the 1st first optical signal is 1271 nanometers, a wavelength of the 2nd first optical signal is 1291 nanometers, a wavelength of the 3rd first optical signal is 1311 nanometers, a wavelength of the 4th first optical signal is 1331 nanometers, a wavelength of the 5th first optical signal is 1351 nanometers, a wavelength of the 6th first optical signal is 1371 nanometers, a wavelength of the 7th of first optical signal is 1391 nanometers, and a wavelength of the 8th of first optical signal is 1411 nanometers. The first optical signals are configured with adjacent wavelengths, so that wave bands of the first mixed optical signals are concentrated within specified wavelengths, allowing a peer device to demultiplex the mixed optical signals more easily.

In a possible implementation method, the internal multiplexer unit 1212 is configured to multiplex at least two first optical signals into a first mixed optical signal. When the number of the first optical signals is N, the internal multiplexer unit 1212 may implement N:1 multiplexing, thus reducing the number of single optical modules used, increasing the optical port density, and reducing the number of optical fibers connecting the core-side color-light modules to the passive wavelength division device.

The color-light optical module shown in FIG. 12 includes a receiving module 122. A PD 1222 and an internal demultiplexer unit 1221 are packaged into the receiving module 122. The internal demultiplexer unit 1221 is configured to demultiplex a received second mixed optical signal into at least two second optical signals. The PD 1222 is configured to convert the at least two second optical signals into at least two second electrical signals and transmit the at least two second electrical signals to the core switch. The second electrical signals are in one-to-one correspondence with the second optical signals. To be specific, the number of the second optical signals is equal to the number of the second electrical signals, and different second optical signals correspond to different wavelengths.

In a possible implementation method, the receiving module 122 is a receiving box BOX, and the PD 1222 and the internal demultiplexer unit 1221 are packaged into the receiving box BOX.

In a possible implementation method, the internal demultiplexer unit 1221 demultiplexes a received second mixed optical signal into N second optical signals, and the N second optical signals have N different center wavelengths, where N is an integer greater than or equal to 2. The PD 1222 is configured to convert the N second optical signals into second electrical signals and transmit the second electrical signals to the core switch.

In a possible implementation method, the internal demultiplexer unit 1221 includes a one-stage internal demultiplexer or a multi-stage internal demultiplexer. When the internal demultiplexer unit 1221 includes a one-stage internal demultiplexer, the one-stage internal demultiplexer demultiplexes the second mixed optical signal into at least two second optical signals. When the internal demultiplexer unit 1221 includes a multi-stage internal demultiplexer, the multi-stage internal demultiplexer demultiplexes the second mixed optical signal at least twice to obtain at least two second optical signals. The multi-stage internal demultiplexer includes a first-stage internal demultiplexer and second internal demultiplexers, where the first-stage internal demultiplexer demultiplexes the second mixed optical signal into a plurality of mixed optical signals, and the number of the first-stage internal demultiplexer is 1. There are a plurality of second-stage internal demultiplexers, and each second-stage internal demultiplexer demultiplexes a received mixed optical signal into a plurality of mixed optical signals or a plurality of second optical signals. When the internal demultiplexer unit is a two-stage structure, each second-stage internal demultiplexer is configured to convert a received mixed optical signal into a plurality of second optical signals; and when the internal demultiplexer unit is a structure with more than two stages, each second-stage internal demultiplexer is configured to demultiplex the received mixed optical signal into a plurality of mixed optical signals and transmit the plurality of mixed optical signals to the next-stage internal demultiplexer, until the last-stage internal demultiplexer demultiplexes the mixed optical signals into second optical signals.

In a possible implementation method, in the N second optical signals, center wavelengths of adjacent second optical signals have a same wavelength spacing. Based on the wavelength range of the CWDM technology, in an example in which N is 8, wavelengths of the N second optical signals are respectively: a wavelength of the 1st second optical signal is 1431 nanometers, a wavelength of the 2nd second optical signal is 1451 nanometers, a wavelength of the 3rd second optical signal is 1471 nanometers, a wavelength of the 4th second optical signal is 1491 nanometers, a wavelength of the 5th second optical signal is 1511 nanometers, a wavelength of the 6th second optical signal is 1531 nanometers, a wavelength of the 7th second optical signal is 1551 nanometers, and a wavelength of the 8th second optical signal is 1571 nanometers. The second optical signals are configured with adjacent wavelengths, so that wave bands of the second mixed optical signals received by the internal demultiplexer 1221 are concentrated within specified wavelengths, allowing the internal demultiplexer 1221 to demultiplex the mixed optical signals more easily.

In a possible implementation method, center wavelengths each of the N second optical signals differs from center wavelengths each of the N first optical signals, thereby implementing transmission via a same optical fiber.

The color-light optical module shown in FIG. 12 further includes an external multiplexer/demultiplexer 123. The external multiplexer/demultiplexer 123 is connected to both the transmitting module 121 and the receiving module 122 and is positioned outside the transmitting module 121 and the receiving module 122. The external multiplexer/demultiplexer 123 is configured to transmit a first mixed optical signal multiplexed by the transmitting module 121 and transmit a received second mixed optical signal to the receiving module 122.

In a possible implementation method, the external multiplexer/demultiplexer 123 is connected to both the transmitting box BOX and the receiving box BOX respectively, positioned outside the transmitting box BOX and the receiving box BOX, and configured to transmit the composite transmitted optical signals and receive the composite received optical signals transmitted by the access switches via a same single optical fiber. The external multiplexer receives a composite transmitted optical signal transmitted by the internal multiplexer unit 1212 and multiplexes the composite transmitted optical signal on a single optical fiber and transmits the composite transmitted optical signal to the access switches. A composite received optical signal transmitted by the access switches is received via a single optical fiber, and the external demultiplexer demultiplexes the composite received optical signal and transmits the demultiplexed composite received optical signal to the internal demultiplexer unit 1221.

In a possible implementation method, the external multiplexer/demultiplexer 123 is used for transmission of mixed signals. The external multiplexer/demultiplexer 123 transmits a first mixed optical signal and receives a second mixed optical signal via a same optical fiber.

In a possible implementation method, in addition to implementing transmission of mixed signals, the external multiplexer/demultiplexer 123 is further used for implementing multiplexing and demultiplexing of optical signals. To be specific, the external multiplexer/demultiplexer 123 has functions similar to functions of the internal multiplexer unit 1212 and the internal demultiplexer unit 1221, thereby implementing the multiplexing and demultiplexing of optical signals. In a scenario requiring multi-stage multiplexing or multi-stage demultiplexing, the external multiplexer/demultiplexer 123 may serve as a first-stage multiplexer and/or demultiplexer therein. Alternatively, in a case that the color-light optical module includes a plurality of transmitting modules 121 and a plurality of receiving modules 122, the external multiplexer/demultiplexer 123 may be configured to receive a plurality of composite transmitted optical signals corresponding to the plurality of transmitting modules 121, further multiplex the signals, and then transmit the signals to the access switches. The external multiplexer/demultiplexer 123 may further be configured to receive composite received optical signal transmitted by the access switches, demultiplex the signals, and then transmit the signals to the internal demultiplexer unit 1221 corresponding to the plurality of receiving modules 122.

In a possible implementation, the transmitting module 121 shown in FIG. 12 is a transmitting box BOX, and the receiving module 122 is a receiving box BOX. In an example in which the number N of the first optical signals and the second optical signals is 8, the internal multiplexer unit 1212 in the transmitting box BOX includes one 8:1 multiplexer, and the internal demultiplexer unit 1221 in the receiving box BOX includes one 1:8 demultiplexer. Such an integrated color-light optical module includes two-stage multi-channel multiplexers (Mux), where three multiplexers/demultiplexers (Mux/Demux) are used, which may realize a primary link with a total of 8 channels, and require only a single optical fiber to establish optical interconnection with an access side.

Specifically, a first-stage Mux is located in the transmitting box BOX, where the 8:1 multiplexer inside the transmitting box BOX is connected to the color laser. A first-stage DeMux is located in the receiving box BOX, where the 1:8 demultiplexer in the receiving box BOX is connected to the PD.

In this way, the foregoing integrated color-light optical module is obtained through packaging and integrating with functions of 8-transmitting, 8-receiving, and WDM technology. The color laser is a color-light laser diode (LD) laser, in which an 8-channel color-light LD laser is packaged in the transmitting BOX. Taking CWDM as an example, the 8-channel color-light LD laser includes the first 8 wavelength channels, with a channel spacing of 20 nm. The wavelengths of these channels are 1271 nm, 1291 nm, 1311 nm, 1331 nm, 1351 nm, 1371 nm, 1391 nm, and 1411 nm, respectively. APD with 8 channels is packaged in the receiving box BOX, including the subsequent 8 wavelength channels with a channel spacing of 20 nm. The wavelengths of these channels are 1431 nm, 1451 nm, 1471 nm, 1491 nm, 1511 nm, 1531 nm, 1551 nm, and 1571 nm, respectively. Optionally, the first 8 wavelength channels may serve as receiving channels, and the subsequent 8 wavelength channels may serve as transmitting channels.

For the second-stage Mux/DeMux, reference is made to the principle of a Bidirectional (BIDI) technology for single-fiber bidirectional optical modules. One second-stage Mux/DeMux is externally positioned, and the internal 8:1 multiplexer is connected to the second-stage Mux/DeMux via an optical fiber, implementing 8-channel transmission and 8-channel reception through single optical fiber transmission. The second-stage Mux/DeMux is positioned outside the package of the transmitting BOX and the receiving BOX but is positioned inside the package of an overall BOX enclosure, and includes a 2:1 multiplexer Mux and a 1:2 demultiplexer DeMux. After transmitted to a peer device via a single optical fiber, the composite transmitted optical signals interact with a plurality of access switches.

When the internal multiplexer unit 1212 includes a plurality of stages of internal multiplexers, there are a plurality of first-stage internal multiplexers and one last-stage internal multiplexer. Each stage of internal multiplexer is configured to multiplex a corresponding number of inputted transmitted optical signals and transmit the multiplexed transmitted optical signals to a next-stage internal multiplexer, until the transmitted optical signals of N wave bands are multiplexed into one composite transmitted optical signal.

In an example in which N is 8, the internal multiplexer unit includes two stages of internal multiplexers, where first-stage internal multiplexers include two internal 4:1 multiplexers, and a second-stage internal multiplexer is an internal 2:1 multiplexer. The internal demultiplexer unit includes two stages of internal demultiplexers, where a first-stage internal multiplexer includes one internal 1:2 demultiplexer, and second-stage internal multiplexers include two internal 1:4 demultiplexers.

Certainly, the multi-stage internal multiplexer and multi-stage internal demultiplexer may also be in other multi-stage forms. For example, the multi-stage internal multiplexer may include four first-stage internal 2:1 multiplexers and one second-stage 4:1 multiplexer. The plurality of stages are not limited to two stages and may also be three stages, and the like. The multi-stage internal demultiplexer may adopt a same multi-stage form. This is not described herein again.

The integrated color-light optical module, transmitting module, and receiving module provided in the embodiments of this application are integrated with a passive wavelength division multiplexing function. Inside the optical module, optical signals are multiplexed to implement transmission via a single optical fiber. This integrated optical module simplifies the layout of optical fiber connection and increases the density of board cards. During establishment of an external connection, transmission is implemented via a single optical fiber, reducing space occupied by networking and significantly reducing the number of external optical fibers that are connected and the networking complexity, thereby reducing construction costs, improving maintainability, and improving product quality reliability.

Referring to FIG. 13, FIG. 13 is a schematic diagram of a connection between an integrated color-light optical module and a core switch according to an embodiment of this application. As shown in FIG. 13, the color-light optical module is packaged in an integrated packaging box 124, in which the transmitting module 121, the receiving module 122, and the external multiplexer/demultiplexer 123 are packaged. The color-light optical module is in hot-pluggable connection with the core switch.

In a possible implementation method, the transmitting module 121 and the receiving module 122 are separately packaged using separate packaging technologies. The external multiplexer/demultiplexer 123 is positioned outside the separately packaged transmitting module 121 and receiving module 122, but is positioned in the color-light optical module. The transmitting module 121 and receiving module 122 conform to the standards of the BOX packaging technology and adopt a standard size. Using a standard packaging technology and a corresponding standard size for packaging can simplify the packaging process and reducing the packaging costs.

If the color laser unit 1211 and internal multiplexer unit 1212 in the transmitting module 121, or the internal demultiplexer unit 1221 and PD 1222 in the receiving module 122 have a large size, and a packaging technology adopting a standard size cannot meet the packaging requirements, a process corresponding to the BOX packaging technology standards can be used for packaging, but the size can be customized as required. For example, non-standard sizes of metal components of a housing, optical port connectors, and the like are customized as required, so as to meet the requirements of different scenarios.

The standard BOX packaging technology may be, but is not limited to, the 400G QSFP-DD LR8 device technology. 8 small form-factor pluggable ( SFP) optical modules along with the color-light optical module (including the color laser unit/PD) on an access side and the WDM passive wavelength division device (the internal multiplexer unit/intemal demultiplexer unit) can be integrated into one packaging apparatus by using this packaging technology, and are in pluggable connection with the core switch, so that an optical fiber fixing rack and a wavelength division multiplexing box positioned outside the core switch are omitted, reducing space occupied by networking and significantly reducing the number of external optical fibers that are connected and the networking complexity, thereby reducing construction costs, improving maintainability, and improving product quality reliability.

A large-size packaging standard may include, but is not limited to, chip scale package (CSP), CSP2, and the like, which is provided with a mature matched packaging industry chain and multisource agreement (MSA) standard protocols, facilitating large-scale popularization.

Metal structural components are used for packaging the transmitting module 121 and receiving module 122, and optical fibers are arranged internally for connection. Internal fiber trays and LC interfaces may be positioned internally. Specifically, a printed circuit board assembly (PCBA) is used.

In a possible implementation method, an integrated packaging box 124 for packaging the color-light optical module is externally provided with a gold finger 125 and an optical fiber interface. The integrated packaging box 124 is connected to the core switch via the gold finger 125. The optical fiber interface is configured to be connected to an optical fiber that transmits and receives mixed optical signals, and the optical fiber can be plugged into the optical fiber interface, so as to prevent loosening of optical fiber connection. The gold finger 125 may be formed by a plurality of conductive contact pieces. The plurality of conductive contact pieces are each plated with gold on surface and are arranged in a finger shape. The color laser unit in the transmitting module 121 is connected to the core switch via the gold finger 125 and is configured to receive at least two first electrical signals transmitted by the core switch. The PD 1222 in the receiving module 122 is connected to the core switch via the gold finger 125 and is configured to transmit at least two second electrical signals to the core switch.

In a possible implementation method, data transmission rates supported by the transmitting module 121 and the receiving module 122 include one of the following transmission rates: 1 Gbit/s, 1.25 Gbit/s, 10 Gbit/s, 25 Gbit/s, and 50 Gbit/s. When different data transmission rates are adopted, different packaging technologies may be adopted for separately packaging the transmitting module 121 and the receiving module 122.

In a possible implementation method, the packaging of the transmitting box BOX and the receiving box BOX satisfies N:1 box packaging technology standards and adopts a standard size. To be specific, in a case that the packaging technology can meet the requirements, a standard BOX packaging technology and a corresponding standard size are directly adopted for implementing the packaging of the transmitting box BOX and the receiving box BOX. For example, in a case that the N is 8 and the data transmission rate supported by the color laser unit is 10 Gbit/s, a standard BOX packaging technology and a corresponding standard size are adopted for implementing the packaging of the transmitting box BOX and the receiving box BOX. For example, in a case that the N is 8 and the data transmission rate supported by the color laser unit is 1.25 Gbit/s, a standard BOX packaging technology and a corresponding standard size are adopted for implementing the packaging of the transmitting box BOX and the receiving box BOX. For example, in a case that the N is 8 and the data transmission rate supported by the color laser unit is 25 Gbit/s, a standard BOX packaging technology and a corresponding standard size are adopted for implementing the packaging of the transmitting box BOX and the receiving box BOX.

In a possible implementation method, the packaging of the transmitting box BOX and the receiving box BOX satisfies N:1 box packaging technology standards and adopts a customized size. If the color laser unit, the internal multiplexer, the internal demultiplexer, and the PD have a large size, and a packaging technology adopting a standard size cannot meet the packaging requirements, a process corresponding to the BOX packaging technology standards can be used for packaging, but the size can be customized as required. For example, non-standard sizes of metal components of a housing, optical port connectors, and the like are customized as required, so as to meet the requirements of different scenarios. For example, in a case that the N is 8 and the data transmission rates supported by the color laser unit are 1 Gbit/s, 10 Gbit/s, 25 Gbit/s, and 50 Gbit/s, a standard BOX packaging technology and a customized size are adopted for implementing the packaging of the transmitting BOX and the receiving BOX. For example, in a case that the N is another value other than 8 and the data transmission rates supported by the color laser unit are 1 Gbit/s, 10 Gbit/s, 25 Gbit/s, and 50 Gbit/s, a standard BOX packaging technology and a customized size are adopted for implementing the packaging of the transmitting BOX and the receiving BOX.

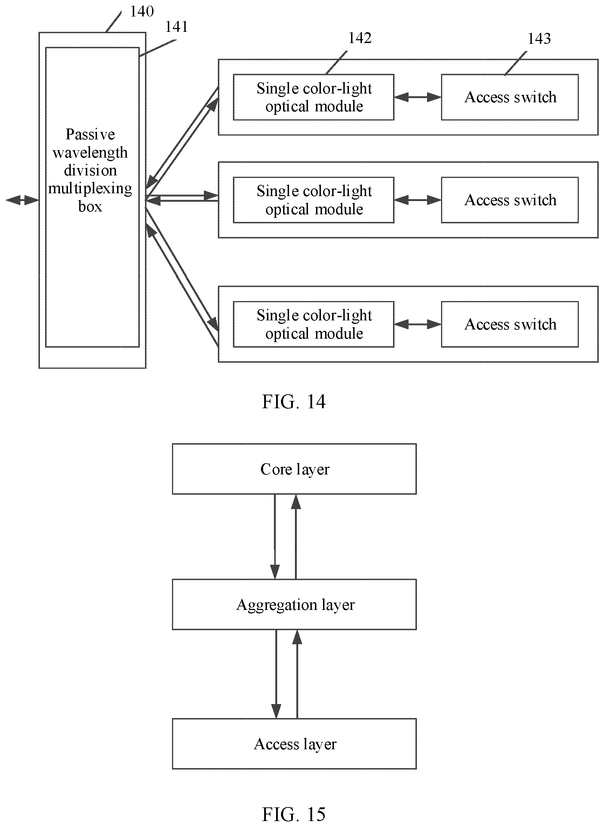

Referring to FIG. 14, FIG. 14 is a schematic diagram of a remote access module connected to an integrated color-light optical module according to an embodiment of this application. The remote access module includes a passive wavelength division multiplexing box 141 and single color-light optical modules 142. After receiving a first mixed optical signal transmitted by the color-light optical module, the passive wavelength division multiplexing box 141 demultiplexes the first mixed optical signal and transmits each demultiplexed optical signal to a single color-light optical module 142. The single color-light optical module 142 is connected to the access switch 143, and the single color-light optical module 142 transmits the received optical signals to the access switch 143. The single color-light optical module 142 is fixed using an optical distribution frame 140, and the optical distribution frame 140 is configured to organize optical fibers. In addition, the single color-light optical module 142 is further configured to receive optical signals transmitted by the access switch and transmit the received optical signals to the passive wavelength division multiplexing box 141. The passive wavelength division multiplexing box 141 multiplexes all the received optical signals into a second mixed optical signal and transmits the second mixed optical signal to the integrated color-light optical module. In this embodiment of this application, the remote access module may be a passive wavelength division multiplexing box 141, and remote optical modules may include a plurality of single color-light optical modules 142.

In a possible implementation method, the signal conversion module of this application is applied to a campus network. The campus network refers to a network in a campus (a campus generally includes a plurality of buildings). For example, the networks of entities such as hospitals, schools, government agencies, and enterprises can all be referred to as campus networks. Certainly, the signal conversion module of this application may also be applied to other network systems, which is not limited in this application.

In a possible implementation, as shown in FIG. 15, the campus network adopts a three-layer structure design, including a core layer, an aggregation layer, and an access layer. The core layer is a high-speed switching backbone of the network and plays a crucial role in the connectivity of the entire network. The aggregation layer acts as an "intermediary" between the access layer and the core layer, implementing aggregation before a workstation accesses the core layer, so as to reduce the load of a core-layer device. The access layer provides workstation access to a local network segment. In three-layer network architectures, core-layer switches are typically deployed in data center equipment rooms of campuses; aggregation-layer switches are typically deployed in low voltage rooms of various buildings in campuses; and access-layer switches are typically deployed in low voltage rooms or floors of various buildings in campuses. Deploying aggregation-layer switches in low voltage rooms brings one or more of the following issues: (1) some teaching buildings were designed a long time ago and lack a low voltage room design, so there is no place to deploy aggregation devices, and the aggregation devices can only be placed in hallways or offices; and (2) the environment of the low voltage rooms is poor, for example, the low voltage rooms have no air conditioner, are close to restrooms, or are used for special purposes involving acidic or alkaline substances; or the low voltage rooms are located in poor external environment, such as high temperatures, high humidity, or frequent lightning strikes.

In a possible implementation method, a signal conversion module provided in this application can achieve functions of an aggregation layer with reference to a remote access module in FIG. 14. The signal conversion module in this application is a highly integrated module, and this module can be directly deployed in a data center equipment room of a campus network. In addition, the signal conversion module in this application operates in a passive manner, that is, the signal conversion module does not require an electrical power supply. The signal conversion module provided in this application may be an integrated color-light optical module. The integrated color-light optical module may include units such as a color laser, a PD, an internal multiplexer, an internal demultiplexer, and an external multiplexer/demultiplexer. Therefore, deploying the signal conversion module of this application in a campus network can address the foregoing issues present in low voltage rooms.

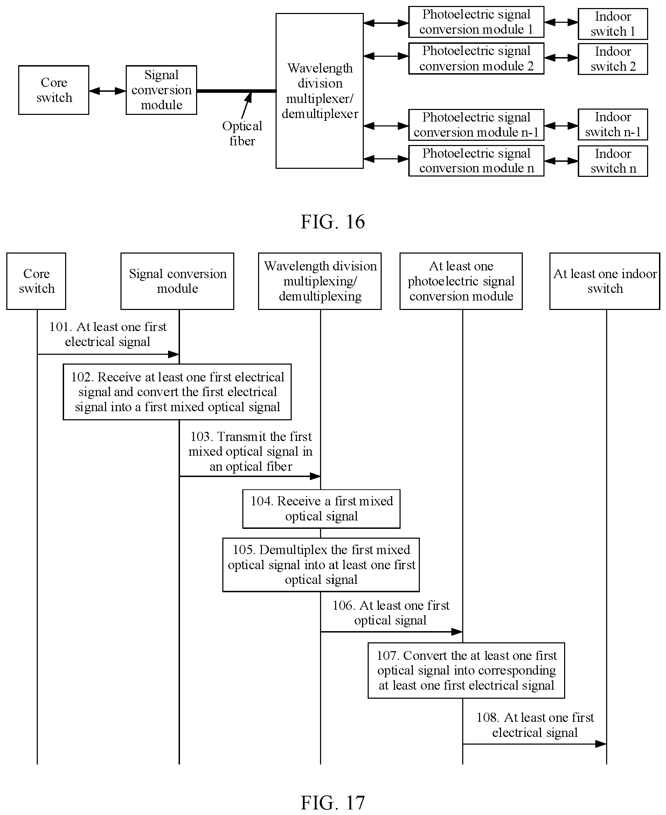

In a possible implementation method, a structural diagram of interconnection of components of a signal conversion module provided in this application in a two-layer network is as shown in FIG. 16. n is greater than or equal to 2, and n represents a maximum value of the number of the at least two first optical signals or the at least two second optical signals. For example, if a first mixed optical signal transmitted by the signal conversion module includes 9 first optical signals, and a second mixed optical signal received by the signal conversion module includes 9 second optical signals, n is 9. The structural diagram of interconnection of components shown in FIG. 16 shows an optical fiber transmission system. The optical fiber transmission system includes a core switch, a signal conversion module, a wavelength division multiplexer/demultiplexer, photoelectronic signal conversion modules, and access switches, where the core switch is configured to provide at least two first electrical signals to the signal conversion module and receive at least two first electrical signals transmitted by the signal conversion module. The signal conversion module is configured to receive the at least two first electrical signals provided by the core switch, generate at least two first optical signals based on the at least two first electrical signals, multiplex the at least two optical signals into a first mixed optical signal, transmit the first mixed optical signal to the multiplexer/demultiplexer, receive a second mixed optical signal transmitted by the multiplexer/demultiplexer, demultiplex the second mixed optical module into at least two second optical signals, convert the at least two second optical signals into at least two electrical signals, and transmit the at least two electrical signals to the core switch. The wavelength division multiplexer/demultiplexer is configured to receive the first mixed optical signal transmitted by the signal conversion module, demultiplex the first mixed optical signal into at least two third optical signals, transmit the at least two third optical signals to the photoelectric signal conversion modules, receive at least two fourth optical signals transmitted by the photoelectric signal conversion modules, and multiplex the at least two fourth optical signals into the second mixed optical signal. The photoelectric signal conversion modules are configured to receive the at least two third optical signals transmitted by the wavelength division multiplexer/demultiplexer, generate at least two third electrical signals based on the at least two received third optical signals, transmit the at least two third electrical signals to the access switches, receive at least two fourth electrical signals transmitted by the access switches, generate at least two fourth optical signals based on the at least two fourth electrical signals, and transmit the at least two fourth optical signals to the wavelength division multiplexer/demultiplexer. The access switches are configured to receive the at least two third electrical signals transmitted by the photoelectric signal conversion module, and transmit the at least two fourth electrical signals to the photoelectric signal conversion module. The multiplexer/demultiplexer in this embodiment of this application may be a remote access module, and the photoelectric signal conversion module may be a remote optical module.

In a possible implementation method, the following uses FIG. 17 as an example to describe an interaction process of components from a transmitting time of first electrical signals by the core switch to a receiving time of the first electrical signals by the indoor switch. The process includes the following steps.

Step 101. Transmit at least one first electrical signal by at least one core switch.

In a possible implementation method, the core switch refers to a switch operating in a core layer.

Step 102. Receive at least one first electrical signal and convert the first electrical signal into a first mixed optical signal by the signal conversion module.

Step 103. Transmit the first mixed optical signal in an optical fiber.

Step 104. Receive the first mixed optical signal by the wavelength division multiplexer/demultiplexer.

Step 105. Demultiplex the first mixed optical signal into at least one first optical signal by the wavelength division multiplexer/demultiplexer.

Step 106. Transmit the at least one first optical signal to at least one photoelectric signal conversion module by the wavelength division multiplexer/demultiplexer.

In a possible implementation method, the photoelectric signal conversion module refers to a photoelectric signal conversion module that is used by an access layer and can implement relevant conversion between optical signals and electrical signals. For example, one photoelectronic signal conversion module may convert one first optical signal into corresponding one first electrical signal, and may also convert one second electrical signal into one second optical signal.

Step 107. Convert the at least one first optical signal into corresponding at least one first electrical signal by the at least one photoelectric signal conversion module.

Step 108. Receive the corresponding at least one first electrical signal by at least one indoor switch.

In a possible implementation method, each first electrical signal corresponds to one indoor switch. For example, an indoor switch 1 receives a 1st first electrical signal, and an indoor switch 2 receives a 2nd second electrical signal.

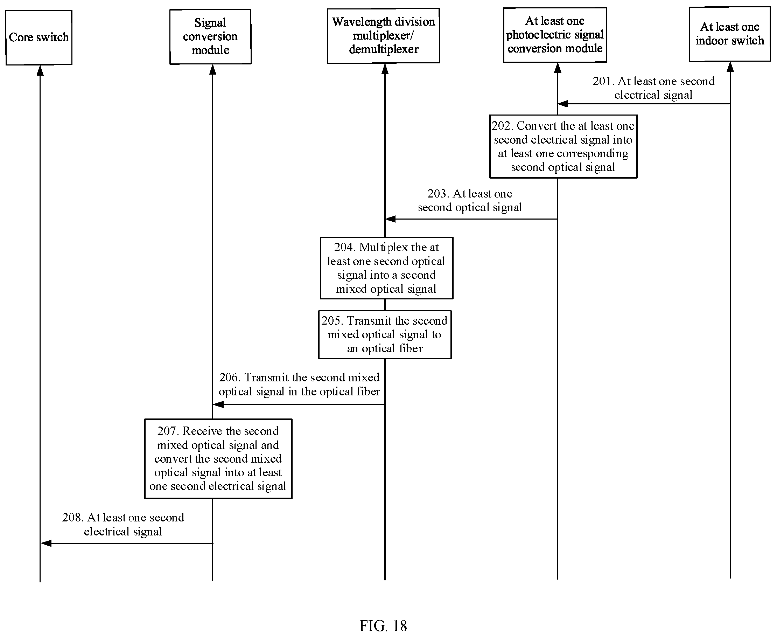

In a possible implementation method, the following uses FIG. 18 as an example to describe an interaction process of components from a transmitting time of second electrical signals by at least one switch to a receiving time of at least one second electrical signal by the core switch. The process includes the following steps.

Step 201. Transmit at least one second electrical signal by at least one indoor switch.

Step 202. Convert the at least one second electrical signal into at least one corresponding second optical signal by the at least one photoelectric signal conversion module.

Step 203. Transmit the at least one second optical signal to the wavelength division multiplexer/demultiplexer by the at least one photoelectric signal conversion module.

Step 204. Multiplex the at least one second optical signal into a second mixed optical signal by the wavelength division multiplexer/demultiplexer.

Step 205. Transmit the second mixed optical signal to an optical fiber by the wavelength division multiplexer/demultiplexer.

Step 206. Transmit the second mixed optical signal in the optical fiber.

Step 207. Receive the second mixed optical signal and convert the second mixed optical signal into at least one second electrical signal by the signal conversion module.

Step 208. Receive the at least one second electrical signal by the core switch.

In a possible implementation method, when step 201 to step 208 are performed, step 101 to step 108 can be performed simultaneously.

In a possible implementation method, a signal conversion module provided in this application is applicable to not only campus network architectures but also other switching/routing physical networks.

In a possible implementation method, according to the signal conversion module provided in this application, the signal conversion module may be connected to a plurality of core switches. For example, if the signal conversion module can receive 8 first electrical signals, the signal conversion module can be connected to 8 core switches.

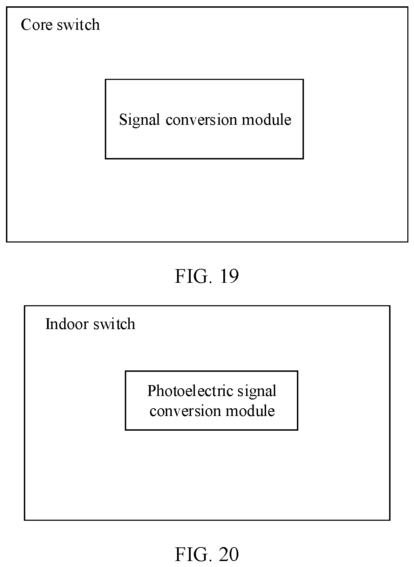

In a possible implementation method, according to the signal conversion module provided in this application, the signal conversion module can be integrated into the core switch, as shown in FIG. 19. According to the photoelectric signal conversion module provided in this application, the photoelectric signal conversion module can be integrated into the indoor switch, as shown in FIG. 20.

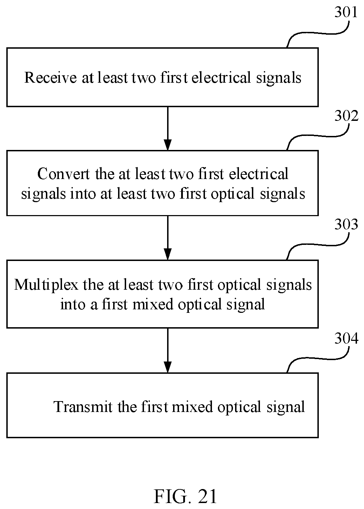

Based on the same technical concept, this application provides a signal conversion method. The method may be executed by a signal conversion module or by part of the modules in the signal conversion module. An executing entity of the method is not limited in this application. The signal conversion module includes a communication unit, a conversion unit, and a processing unit. FIG. 21 is a schematic flowchart of a signal conversion method according to an embodiment of this application. The method includes the following steps.

Step 301. Receive at least two first electrical signals.

Step 302. Convert the at least two first electrical signals into at least two first optical signals.

The at least two first optical signals respectively correspond to different wavelengths.

In a possible implementation method, based on a wavelength range of a coarse wavelength division multiplexer technology, a wavelength range of the first optical signals is 1271 nanometers to 1411 nanometers, and a wavelength spacing corresponding to the at least two first optical signals is 20 nanometers. Certainly, this wavelength spacing may also be within another range, which is not limited in this application. Based on a wavelength range of a dense wavelength division multiplexing technology, the wavelength range of the first optical signals is 1525 nanometers to 1565 nanometers, and a wavelength spacing corresponding to the at least two first optical signals is 0.2 nanometer to 1.2 nanometers, which may specifically be 0.8 nanometer. Certainly, this wavelength spacing may also be within another range, which is not limited in this application.

Step 303. Multiplex the at least two first optical signals into a first mixed optical signal.

Step 304. Transmit the first mixed optical signal.

In this solution, at least two first electrical signals can be received simultaneously, and the at least two first electrical signals are processed, which can improve the efficiency for processing the at least two first electrical signals.

In a possible implementation method, a plurality of optical signals in the at least two first optical signals are multiplexed into a third mixed optical signal; a plurality of remaining optical signals in the at least two first optical signals are multiplexed into a fourth mixed optical signal; and the third mixed optical signal and the fourth mixed optical signal are multiplexed into the first mixed optical signal. In this solution, the at least two first optical signals are divided into two parts, and the two parts of first optical signals are separately processed, improving the efficiency for multiplexing the at least two optical signals into a mixed signal.

The above solution may be executed by a signal conversion module or by part of modules in the signal conversion module, and the signal conversion module does not need to be deployed in a dedicated low voltage room (some organizations even have no low voltage room, and if there is no low voltage room or the environment of the low voltage room is poor, the signal conversion module cannot be deployed, resulting in poor applicability). Therefore, the signal conversion module provided in this application can reduce the operation and maintenance costs and difficulties of low voltage rooms, and achieve high applicability. The signal conversion module may be deployed in an indoor equipment room, so that the signal conversion module is not subject to external temperature, humidity, or lightning weather. This reduces the impact of the natural environment on the signal conversion module, prolongs the service life of the signal conversion module, and reduces replacement and maintenance costs.

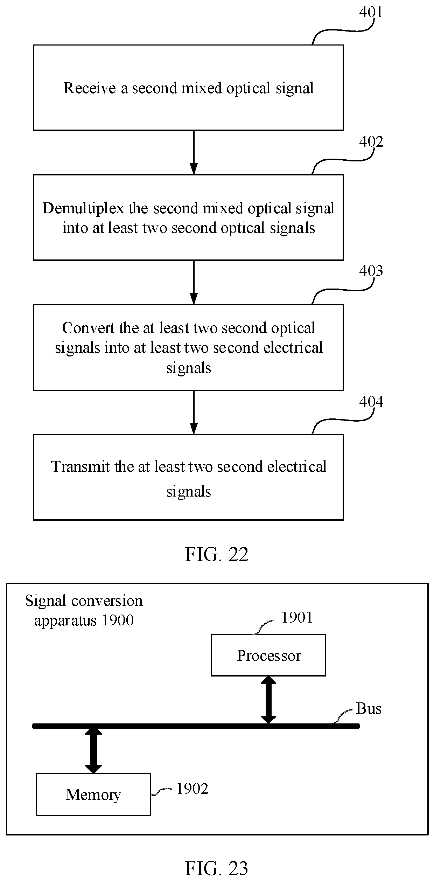

In a possible implementation method, FIG. 22 is a schematic flowchart of a signal conversion method according to an embodiment of this application. The method includes the following steps.

Step 401. Receive a second mixed optical signal.

In a possible implementation method, a fifth mixed optical signal is received, where the fifth mixed optical signal includes a second mixed optical signal and an interference optical signal; and the interference optical signal is filtered out.

In a possible implementation method, the interference signal is filtered out by using a single optical filter or the interference signal is filtered out by using a plurality of optical filters based on the second mixed optical signal.

The above solution can effectively eliminate the interference optical signal to obtain an accurate second mixed optical signal.

Step 402. Demultiplex the second mixed optical signal into at least two second optical signals.

The at least two second optical signals respectively correspond to different wavelengths.

In a possible implementation method, the second mixed optical signals are demultiplexed into sixth mixed optical signals and seventh mixed optical signals, where the sixth mixed optical signals are some mixed optical signals in the second mixed optical signals, and the seventh mixed optical signals are the other mixed optical signals in the second mixed optical signals. The sixth mixed optical signals are demultiplexed into a plurality of optical signals in the at least two second optical signals, and the seventh mixed optical signals are demultiplexed into the remaining optical signals in the at least two second optical signals.

In a possible implementation method, based on the wavelength range of the CWDM technology, a wavelength range of the second optical signals is 1431 nanometers to 1571 nanometers, and a wavelength spacing corresponding to at least two second optical signals is 20 nanometers. Certainly, this wavelength spacing may also be within another range, which is not limited in this application. Based on the wavelength range of the DWDM technology, the wavelength range of the second optical signals is 1570 nanometers to 1610 nanometers, and a wavelength spacing corresponding to at least two first optical signals is 0.2 nanometer to 1.2 nanometers, which may specifically be 0.8 nanometer.

Step 403. Convert the at least two second optical signals into at least two second electrical signals.

Step 404. Transmit the at least two second electrical signals.

The above solution may be executed by a signal conversion module or by part of modules in the signal conversion module, and the signal conversion module does not need to be deployed in a dedicated low voltage room (some organizations even have no low voltage room, and if there is no low voltage room or the environment of the low voltage room is poor, the signal conversion module cannot be deployed, resulting in poor applicability). Therefore, the signal conversion module provided in this application can reduce the operation and maintenance costs and difficulties of low voltage rooms, and achieve high applicability. The signal conversion module may be deployed in an indoor equipment room, so that the signal conversion module is not subject to external temperature, humidity, or lightning weather. This reduces the impact of the natural environment on the signal conversion module, prolongs the service life of the signal conversion module, and reduces replacement and maintenance costs.

Based on the same technical concept, an embodiment of this application provides a signal conversion apparatus 1900. As shown in FIG. 23, the signal conversion apparatus 1900 includes at least one processor 1901 and a memory 1902 connected to the at least one processor. A specific connection medium between the processor 1901 and the memory 1902 is not limited in this embodiment of the application. As an example, in FIG 19, the processor 1901 and the memory 1902 are connected via a bus. The bus may be an address bus, a data bus, a control bus, and the like.

In this embodiment of this application, the memory 1902 stores an instruction that is executable by the at least one processor 1901, and the at least one processor 1901 can execute the foregoing signal conversion method by executing the instruction stored in the memory 1902.

The processor 1901 is a control center of a signal converting apparatus 1900, and can be connected to all components of a computer device by using various interfaces and lines. Resource configuration is implemented by running or executing instructions stored in the memory 1902 and calling data stored in the memory 1902. Optionally, the processor 1901 may include one or more determining units. The processor 1901 may integrate an application processor and a modem processor. The application processor mainly processes an operating system, a user interface, an application program, and the like. The modem processor mainly processes wireless communication. It can be understood that the modem processor may also be not integrated in the processor 1901. In some embodiments, the processor 1901 and the memory 1902 may be implemented on a same chip. In some embodiments, the processor 1901 and the memory 1902 may also be implemented separately on separate chips.

The processor 1901 may be a general-purpose processor such as a central processing unit (CPU), a digital signal processor, an application-specific integrated circuit (ASIC), a field programmable gate array or another programmable logic device, a discrete gate or transistor logic device, or a discrete hardware component, which may implement or perform the methods, steps, or logic block diagrams disclosed in the embodiments of this application. The general-purpose processor may be a microprocessor, any conventional processor, or the like. Steps of the methods disclosed with reference to the embodiments of this application may be directly performed and completed by using a hardware processor, or may be performed and completed by using a combination of a hardware module and a software module in the processor.

As a non-volatile computer-readable storage medium, the memory 1902 may be configured to store non-volatile software programs, non-volatile computer-executable programs, and modules. The memory 1902 may include at least one type of storage medium, for example, may include a flash memory, a hard disk, a multimedia card, a memory card, a random access memory (RAM), a static random access memory (SRAM), a programmable read-only memory (PROM), a read-only memory (ROM), an electrically erasable programmable read-only memory (EEPROM), a magnetic memory, a magnetic disk, an optical disc, or the like. The memory 1902 is but not limited to any other medium that can be used to carry or store desired program code in a form of an instruction or a data structure and can be accessed by a computer. The memory 1902 in the embodiments of this application may also be a circuit or any other apparatus that can implement a storage function, and is configured to store a program instruction and/or data.

An embodiment of this application further provides a computer-readable storage medium. The computer-readable storage medium stores a computer-executable program, and the computer-executable program is used for enabling a computer to execute a signal conversion method listed in any one of the foregoing manners.

Persons skilled in the art should understand that the embodiments of this application may be provided as a method, system, or computer program product. Therefore, this application may use a form of a hardware-only embodiment, a software-only embodiment, or an embodiment with a combination of software and hardware. In addition, this application may be implemented in a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, device (system), and computer program product according to this application. It should be understood that computer program instructions may be used to implement each procedure and/or block in the flowcharts and/or block diagrams and a combination of a procedure and/or block in the flowcharts and/or block diagrams. These computer program instructions may be provided to a general-purpose computer, a special-purpose computer, an embedded processor, or a processor of another programmable data processing device to generate a machine, so that the instructions executed by the computer or the processor of the another programmable data processing device generate an apparatus for implementing a specific function in one or more processes in the flowcharts and/or one or more blocks in the block diagrams.

These computer program instructions may also be stored in a computer-readable memory that can instruct the computer or the another programmable data processing device to work in a specific manner, so that the instructions stored in the computer-readable memory generate an artifact that includes an instruction apparatus. The instruction apparatus implements a specific function in one or more processes in the flowcharts and/or one or more blocks in the block diagrams.

These computer program instructions may also be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or one or more blocks in the block diagrams.

Apparently, persons skilled in the art can make various changes and variations to this application without departing from the spirit and scope of this application. Therefore, this application is also intended to cover these changes and variations provided that these changes and variations of this application fall within the scope of the claims of this application or equivalent technologies thereof.

## Claims

1. A signal conversion module, wherein the signal conversion module comprises:
a conversion unit, configured to convert at least two received first electrical signals into at least two first optical signals, wherein the at least two first optical signals respectively correspond to different wavelengths; and
a processing unit, configured to multiplex the at least two first optical signals into a first mixed optical signal.

2. The signal conversion module according to claim 1, wherein the at least two first electrical signals are electrical signals transmitted by a core switch.

3. The signal conversion module according to claim 1, wherein
the processing unit is further configured to demultiplex a received second mixed optical signal into at least two second optical signals, wherein the at least two second optical signals respectively correspond to different wavelengths; and
the conversion unit is further configured to convert the at least two second optical signals into at least two second electrical signals.

4. The signal conversion module according to claim 3, wherein the second mixed optical signal is a mixed optical signal obtained by multiplexing a plurality of optical signals transmitted by access switches.

5. The signal conversion module according to claim 3, wherein the conversion unit comprises:
a color laser sub-unit, configured to convert the at least two received first electrical signals into at least two first optical signals, wherein the at least two first optical signals respectively correspond to different wavelengths; and
a detector sub-unit, configured to convert the at least two received second optical signals into the at least two second electrical signals.

6. The signal conversion module according to claim 3, wherein the processing unit comprises:
an internal multiplexer sub-unit, configured to multiplex the at least two received first optical signals into a first mixed optical signal; and
an internal demultiplexer sub-unit, configured to demultiplex the received second mixed optical signal into at least two second optical signals, wherein the at least two optical signals correspond to different wavelengths.

7. The signal conversion module according to claim 6, wherein the internal multiplexer sub-unit comprises:
first-stage internal multiplexers, configured to multiplex the at least two received first optical signals into a third mixed optical signal and a fourth mixed optical signal; and
a second-stage internal multiplexer, configured to multiplex the third mixed optical signal and the fourth mixed optical signal into the first mixed optical signal.

8. The signal conversion module according to claim 6, wherein the internal demultiplexer sub-unit comprises:
a first-stage internal demultiplexer module, configured to demultiplex the received second mixed optical signal into at least two mixed optical signals; and
second-stage internal demultiplexer modules, configured to demultiplex the at least two mixed optical signals into a plurality of second optical signals.

9. The signal conversion module according to claim 3, wherein the processing unit further comprises an optical filter, and
the optical filter is configured to filter out an interference signal to obtain the second mixed optical signal.

10. The signal conversion module according to claim 9, wherein the optical filter comprises a first optical filter and a second optical filter, wherein the first optical filter is configured to allow light with a wavelength in a first wave band to pass through, and the second optical filter is configured to allow light with a wavelength in a second wave band to pass through; and the first wave band and the second wave band are in different ranges.

11. The signal conversion module according to claim 3, wherein the signal conversion module further comprises a communication unit; and
the communication unit is configured to transmit the first mixed optical signal and/or receive the second mixed optical signal via an optical fiber.

12. The signal conversion module according to claim 11, wherein the communication unit is an external multiplexer/demultiplexer module.

13. The signal conversion module according to any one of claims 1 to 12, wherein the signal conversion module further comprises:
a gold finger connector, configured to be connected to a core switch; and
an optical fiber interface, configured to be connected to an optical fiber that transmits the first mixed optical signal.

14. A signal conversion method, wherein the signal conversion method comprises:
receiving at least two first electrical signals;
converting the at least two first electrical signals into at least two first optical signals, wherein the at least two first optical signals respectively correspond to different wavelengths;
multiplexing the at least two first optical signals into a first mixed optical signal; and
transmitting the first mixed optical signal.

15. The method according to claim 14, wherein the multiplexing the at least two first optical signals into a first mixed optical signal comprises:
multiplexing a plurality of optical signals in the at least two first optical signals into a third mixed optical signal;
multiplexing a plurality of remaining optical signals in the at least two first optical signals into a fourth mixed optical signal; and
multiplexing the third mixed optical signal and the fourth mixed optical signal into the first mixed optical signal.

16. The method according to claim 14, wherein the method further comprises:
receiving a second mixed optical signal;
demultiplexing the second mixed optical signal into at least two second optical signals, wherein the at least two second optical signals respectively correspond to different wavelengths;
converting the at least two second optical signals into at least two second electrical signals; and
transmitting the at least two second electrical signals.

17. The method according to claim 16, wherein the receiving a second mixed optical signal comprises:
receiving a fifth mixed optical signal, wherein the fifth mixed optical signal comprises the second mixed optical signal and an interference optical signal; and
filtering out the interference optical signal.

18. The method according to claim 17, wherein the filtering out the interference optical signal comprises:
filtering out the interference signal by using a single optical filter or filtering out the interference optical signal by using a plurality of optical filters based on the second mixed optical signal.

19. An optical fiber transmission system, comprising:
a core switch, configured to provide at least two first electrical signals to a signal conversion module and receive at least two second electrical signals transmitted by the signal conversion module;
the signal conversion module, configured to receive the at least two first electrical signals provided by the core switch, generate at least two first optical signals based on the at least two first electrical signals, multiplex the at least two optical signals into a first mixed optical signal, transmit the first mixed optical signal to the remote access module, and configured to receive a second mixed optical signal transmitted by the remote access module, demultiplex the second mixed optical signal into at least two second optical signals, convert the at least two second optical signals into the at least two second electrical signals, and transmit the at least two second electrical signals to the core switch;
the remote access module, configured to receive the first mixed optical signal transmitted by the signal conversion module, demultiplex the first mixed optical signal into at least two third optical signals, transmit the at least two third optical signals to at least two remote optical modules, and configured to receive at least two fourth optical signals transmitted by the at least two remote optical modules, and multiplex the at least two fourth optical signals into the second mixed optical signal;
the at least two remote optical modules, configured to receive the at least two third optical signals, generate at least two third electrical signals based on the at least two received third optical signals, transmit the at least two third electrical signals to at least two access switches, and configured to receive at least two fourth electrical signals transmitted by the access switches, generate at least two fourth optical signals based on the at least two fourth electrical signals, and transmit the at least two fourth optical signals to the at least two remote access modules; and
the at least two access switches, configured to receive the at least two third electrical signals transmitted by the remote optical modules, and transmit the at least two fourth electrical signals to the remote optical modules.

20. A computer-readable storage medium, wherein the storage medium stores a computer program, wherein the computer program is configured to execute the method according to any one of claims 14 to 18 during running.
